(19) Europäisches Patentamt

European Patent Office

Office européen des brevets

(11) **EP 4 550 573 A1**

(12) **EUROPEAN PATENT APPLICATION**
published in accordance with Art. 153(4) EPC

(43) Date of publication:
**07.05.2025 Bulletin 2025/19**

(21) Application number: **22954136.2**

(22) Date of filing: **01.08.2022**

(51) International Patent Classification (IPC):
**H01Q 3/26** (2006.01)  **H04B 7/06** (2006.01)

(52) Cooperative Patent Classification (CPC):
**H01Q 3/26; H04B 7/06**

(86) International application number:
**PCT/SG2022/050545**

(87) International publication number:
**WO 2024/030069 (08.02.2024 Gazette 2024/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **WANG, Wei
 Singapore 138589 (SG)**
• **ZHANG, Heng
 Singapore 138589 (SG)**

(74) Representative: **Maiwald GmbH
Engineering
Elisenhof
Elisenstrasse 3
80335 München (DE)**

(54) **MULTI-TONE SIGNAL SENDING METHOD AND APPARATUS**

(57)  Embodiments of this application provide a method and an apparatus for sending a multi-tone signal. The method includes: generating a first multi-tone signal, where the first multi-tone signal includes N single-tone signals, amplitude values of the single-tone signals are the same, and initial phases of at least two of the N single-tone signals are the same, or absolute values of initial phases of at least two of the N single-tone signals are the same, where N is an integer greater than or equal to 2; and sending the first multi-tone signal. According to the method disclosed in this application, average power for sending a multi-tone signal can be increased, and a transmission distance or coverage of the multi-tone signal can be further increased.

600

Generate a first multi-tone signal, where the first multi-tone signal includes N single-tone signals, amplitude values of the single-tone signals are the same, and initial phases of at least two of the N single-tone signals are the same, or absolute values of initial phases of at least two of the N single-tone signals are the same, where N is an integer greater than or equal to 2 — S610

Send the first multi-tone signal — S620

FIG. 6

## Description

## TECHNICAL FIELD

This application relates to the communication field, and more specifically, to a method and an apparatus for sending a multi-tone signal.

## BACKGROUND

Currently, the Bluetooth Special Interest Group (Bluetooth SIG) supports Bluetooth protocols of angle of arrival (angle of arrival, AoA) and angle of departure (angle of departure, AoD), and indoor positioning accuracy is improved based on direction information of Bluetooth low energy (Bluetooth low energy, BLE) signals. In AoA/AoD and multifrequency phase difference (multi-carrier phase difference, MCPD), phase measurement is performed by sending a single-tone (or one carrier) signal, and only a phase of a frequency in an entire industrial scientific medical band (Industrial Scientific Medical band, ISM) can be measured each time. Consequently, it takes a long time to complete measurement of the entire band. When a multi-tone signal is used for phase measurement in AoA/AoD or MCPD ranging, an overall measurement time and required power consumption can be greatly reduced.

However, it is considered that a power amplifier (power amplifier, PA) of a sending device has a specific upper limit, and a peak-to-average-power ratio (peak-to-average-power ratio, PAPR) of the multi-tone signal limits average power for sending the multi-tone signal. Therefore, how to improve the average power for sending the multi-tone signal is a problem that urgently needs to be resolved.

## SUMMARY

This application provides a method and an apparatus for sending a multi-tone signal. Initial phases of different multi-tone signals are designed, so that average power for sending a multi-tone signal can be improved, and a transmission distance or coverage of the multi-tone signal can be further increased.

According to a first aspect, a method for sending a multi-tone signal is provided. The apparatus may be performed by a receiving device, or may be performed by a chip or a circuit used in a receiving device. This is not limited in this application. For ease of description, the following is described by using an example in which the method is performed by the receiving device.

The method includes: generating a first multi-tone signal, where the first multi-tone signal includes N single-tone signals, amplitude values of the single-tone signals are the same, and initial phases of at least two of the N single-tone signals are the same, or absolute values of initial phases of at least two of the N single-tone signals are the same, where N is an integer greater than or equal to 2; and sending the first multi-tone signal.

According to the solution provided in this application, different multi-tone signals are designed by changing initial phases, so that a PAPR of a signal is small to a greatest extent, thereby increasing average power for sending the multi-tone signal, and helping increase a transmission distance or coverage of the multi-tone signal.

It should be understood that, in comparison with a conventional multi-tone signal whose initial phases are all 0 by default, average transmit power of the multi-tone signal provided in this application is increased, so that a transmission distance (or coverage) of the signal is increased. For example, if two devices use a multi-tone signal whose initial phases are 0, multi-tone ranging or multi-tone AoA/AoD measurement may not be performed because a received signal is excessively weak.

For example, N=4, and the initial phases of the first multi-tone signal may be 1.81, 0, 0, and 1.81. Alternatively, the initial phases of the first multi-tone signal may be 4.47, 0, 0, and 4.47. Alternatively, the initial phases of the first multi-tone signal may be -0.08, -0.63, 0.63, 3.70, and the like. This is not specifically limited in this application.

It should be noted that a unit of a phase may be a radian, or may be a degree. For ease of understanding, in this application, only a radian is used to represent an initial phase of each single-tone signal in a multi-tone signal. Certainly, it is not excluded that the initial phase is represented by a degree in place of a radian. For brevity, details are not described.

In a possible implementation, based on that initial phases of at least two single-tone signals are the same, a same initial phase $\Delta\varphi$ is added to an initial phase of each single-tone signal in the first multi-tone signal. To be specific, each point of each single-tone signal in the IQ plane is rotated counterclockwise by $\Delta\varphi$, and the corresponding multi-tone signal is also rotated counterclockwise by $\Delta\varphi$ in the IQ plane. This rotation does not change an amplitude of the multi-tone signal, and therefore, an optimal PAPR can also be obtained for the rotated multi-tone signal.

For example, N=4, and the initial phases $\varphi1=1.81$, $\varphi2=0$, $\varphi3=0$, $\varphi4=1.81$ of the single-tone signals in the first multi-tone signal are all rotated counterclockwise by $\Delta\varphi=\pi/6=0.52$, and the corresponding initial phases are $\varphi1=2.33$, $\varphi2=0.52$, $\varphi3=0.52$, $\varphi4=2.33$. It should be understood that PAPRs corresponding to the two initial phase combinations are the same.

In another possible implementation, based on that initial phases of at least two single-tone signals are the same, each single-tone signal in the first multi-tone signal is translated by Δt on a time axis, where Δt is any value, and the corresponding multi-tone signal is also translated by Δt on the time axis. This is equivalent to that the initial phases of the single-tone signals are increased by $2\pi f_i \cdot \Delta t$. The translation does not affect a maximum amplitude value of the multi-tone signal. Therefore, an optimal PAPR can also be obtained for the translated multi-tone signal.

For example, N=4, the initial phases φ1=1.81, φ2=0, φ3=0, φ4=1.81 of the single-tone signals in the first multi-tone signal are all shifted leftward on the time axis by Δt=0.2 μs, and corresponding initial phases are φ1=-0.08, φ2=-0.63, φ3=0.63, φ4=3.70. It should be understood that PAPRs corresponding to the two initial phase combinations are the same.

In still another possible implementation, based on that initial phases of at least two single-tone signals are the same, each point of each single-tone signal in the IQ plane is rotated counterclockwise by Δφ, and each single-tone signal is translated by Δt on a time axis. This also does not affect the maximum amplitude value of the multi-tone signal. Therefore, an optimal PAPR can also be obtained for the multi-tone signal obtained after translation. It should be noted that a sequence of performing rotation and translation processing on the multi-tone signal is not specifically limited.

For example, N=4. After initial phases φ1=1.81, φ2=0, φ3=0, φ4=1.81 of the single-tone signals in the first multi-tone signal are sequentially rotated counterclockwise by Δφ=π/6=0.52, and then shifted leftward by Δt=0.2 μs on the time axis, a PAPR corresponding to the obtained initial phases is the same as a PAPR corresponding to the original initial phases.

With reference to the first aspect, in some implementations of the first aspect, the at least two single-tone signals with the same initial phases are symmetrical about a center frequency.

For example, N=4, an initial phase φ1 of a first single-tone signal is 1.81, an initial phase φ2 of a second single-tone signal is 0, an initial phase φ3 of a third single-tone signal is 0, and an initial phase φ4 of a fourth single-tone signal is 1.81. Correspondingly, a frequency of the first single-tone signal is -1.5 MHz, a frequency of the second single-tone signal is -0.5 MHz, a frequency of the third single-tone signal is 0.5 MHz, and a frequency of the fourth single-tone signal is 1.5 MHz. To be specific, the first single-tone signal and the fourth single-tone signal are symmetrical about the center frequency, and the second single-tone signal and the fourth single-tone signal are symmetrical about the center frequency.

With reference to the first aspect, in some implementations of the first aspect, when N=3, initial phases of a first single-tone signal and a third single-tone signal are the same, a frequency of the first single-tone signal is the smallest, and a frequency of the third single-tone signal is the largest.

For example, N=3, the initial phases of the first single-tone signal and the third single-tone signal may be 0, and an initial phase of a second single-tone signal may be 1.57.

With reference to the first aspect, in some implementations of the first aspect, when N=4, initial phases of a first single-tone signal and a fourth single-tone signal are the same, and/or initial phases of a second single-tone signal and a third single-tone signal are the same, a frequency of the first single-tone signal is the smallest, a frequency of the fourth single-tone signal is the largest, and a frequency of the second single-tone signal is greater than the frequency of the first single-tone signal and less than a frequency of the third single-tone signal.

For example, N=4, the frequency of the first single-tone signal is -1.5 MHz, the frequency of the second single-tone signal is -0.5 MHz, the frequency of the third single-tone signal is 0.5 MHz, and the frequency of the fourth single-tone signal is 1.5 MHz. Correspondingly, the initial phases of the first single-tone signal and the fourth single-tone signal may be 1.81, and the initial phases of the second single-tone signal and the third single-tone signal may be 0.

With reference to the first aspect, in some implementations of the first aspect, when N=5, initial phases of a first single-tone signal and a fifth single-tone signal are the same, initial phases of a second single-tone signal and a fourth single-tone signal are the same, a frequency of the first single-tone signal is the smallest, and a frequency of the fifth single-tone signal is the largest.

For example, N=5, the initial phases of the first single-tone signal and the fifth single-tone signal may be 1.05, the initial phases of the second single-tone signal and the fourth single-tone signal may be 0, and the initial phase of the third single-tone signal may be 3.01.

With reference to the first aspect, in some implementations of the first aspect, when N=6, initial phases of a first single-tone signal and a sixth single-tone signal are the same, initial phases of a second single-tone signal and a fifth single-tone signal are the same, initial phases of a third single-tone signal and a fourth single-tone signal are the same, a frequency of the first single-tone signal is the smallest, and a frequency of the sixth single-tone signal is the largest.

For example, N=6, the initial phases of the first single-tone signal and the sixth single-tone signal may be 5.00, the initial phases of the second single-tone signal and the fifth single-tone signal may be 3.67, and the initial phase of the third single-tone signal may be 0.

With reference to the first aspect, in some implementations of the first aspect, when N=7, initial phases of a first single-tone signal and a seventh single-tone signal are the same, initial phases of a second single-tone signal and a sixth single-tone signal are the same, initial phases of a third single-tone signal and a fifth single-tone signal are the same, a frequency of the first single-tone signal is the smallest, and a frequency of the seventh single-tone signal is the largest.

For example, N=7, the initial phases of the first single-tone signal and the seventh single-tone signal may be 3.14, the initial phases of the second single-tone signal and the sixth single-tone signal may be 4.71, the initial phases of the third single-tone signal and the fifth single-tone signal may be 0, and the initial phase of the fourth single-tone signal may be 4.71.

With reference to the first aspect, in some implementations of the first aspect, when N=8, one or more of the following are met: initial phases of a first single-tone signal and an eighth single-tone signal are the same; initial phases of a second single-tone signal and a seventh single-tone signal are the same; initial phases of a third single-tone signal and a sixth single-tone signal are the same; or initial phases of a fourth single-tone signal and a fifth single-tone signal are the same, where a frequency of the first single-tone signal is the smallest, a frequency of the eighth single-tone signal is the largest, a frequency of the third single-tone signal is greater than a frequency of the second single-tone signal and less than a frequency of the fourth single-tone signal, a frequency of the fifth single-tone signal is greater than the frequency of the fourth single-tone signal and less than a frequency of the sixth single-tone signal, and the frequency of the sixth single-tone signal is less than a frequency of the seventh single-tone signal.

For example, N=8, the initial phases of the first single-tone signal and the eighth single-tone signal may be 5.40, the initial phases of the second single-tone signal and the seventh single-tone signal may be 3.84, the initial phases of the third single-tone signal and the sixth single-tone signal may be 0.91, and the initial phases of the fourth single-tone signal and the fifth single-tone signal may be 0.

With reference to the first aspect, in some implementations of the first aspect, when N=4, a PAPR of a signal is enabled to be less than or equal to 2 dB, and initial phases of the corresponding N single-tone signals meet any one of the following:

$\varphi2=\varphi3=0$, $1.59\leq\varphi1<1.86$, $\varphi4\geq-\varphi1+3.57$, and $\varphi4\leq-\varphi1*4/9+2.69$;
$\varphi2=\varphi3=0$, $1.86\leq\varphi1\leq1.98$, $\varphi4\geq-\varphi1+3.57$, and $\varphi4\leq-\varphi1*9/4+6.04$;
$\varphi2=\varphi3=0$, $4.3\leq\varphi1<4.42$, $\varphi4\leq-\varphi1+8.99$, and $\varphi4\geq-\varphi1*9/4+14.36$; or
$\varphi2=\varphi3=0$, $4.42\leq\varphi1<4.69$, $\varphi4\leq-\varphi1+8.99$, and $\varphi4\geq-\varphi1*4/9+6.38$, where
$\varphi1$ is an initial phase of a first single-tone signal, $\varphi2$ is an initial phase of a second single-tone signal, $\varphi3$ is an initial phase of a third single-tone signal, and $\varphi4$ is an initial phase of a fourth single-tone signal.

With reference to the first aspect, in some implementations of the first aspect, when N=4, a PAPR of a signal is enabled to be less than or equal to 2.5 dB, and initial phases of the corresponding N single-tone signals meet any one of the following:

$\varphi2=\varphi3=0$, $0\leq\varphi1<2.05$, $\varphi4\geq-\varphi1+\pi$, and $\varphi4\leq-\varphi1*0.53+\pi$;
$\varphi2=\varphi3=0$, $2.05\leq\varphi1\leq\pi$, $\varphi4\geq-\varphi1+\pi$, and $\varphi4<-\varphi1*1.88+5.9$;
$\varphi2=\varphi3=0$, $\pi\leq\varphi1<4.23$, $\varphi4\leq-\varphi1+9.42$, and $\varphi4\geq-\varphi1*1.88+12.18$; or
$\varphi2=\varphi3=0$, $4.23\leq\varphi1\leq2\pi$, $\varphi4\leq-\varphi1+9.42$, and $\varphi4\geq-\varphi1*0.53+6.47$, where
$\varphi1$ is an initial phase of a first single-tone signal, $\varphi2$ is an initial phase of a second single-tone signal, $\varphi3$ is an initial phase of a third single-tone signal, and $\varphi4$ is an initial phase of a fourth single-tone signal.

With reference to the first aspect, in some implementations of the first aspect, when N=4, a PAPR of a signal is enabled to be less than or equal to 3 dB, and initial phases of the corresponding N single-tone signals meet any one of the following:

$\varphi2=\varphi3=0$, $0\leq\varphi1<2.3$, $\varphi4\geq-\varphi1+2.92$, and $\varphi4\leq-\varphi1*0.46+3.36$;
$\varphi2=\varphi3=0$, $2.3\leq\varphi1<2.92$, $\varphi4\geq-\varphi1+2.92$, and $\varphi4\leq-\varphi1*2.17+7.29$;
$\varphi2=\varphi3=0$, $2.92\leq\varphi1<3.36$, $\varphi4\geq0$, and $\varphi4\leq-\varphi1*2.17+7.29$;
$\varphi2=\varphi3=0$, $2.92\leq\varphi1<3.36$, $\varphi4\leq2\pi$, and $\varphi4\geq-\varphi1*2.17+12.62$;
$\varphi2=\varphi3=0$, $3.36\leq\varphi1<3.98$, $\varphi4\leq-\varphi1+9.64$, and $\varphi4\geq-\varphi1*2.17+12.62$; or
$\varphi2=\varphi3=0$, $3.98\leq\varphi1<2\pi$, $\varphi4\leq-\varphi1+9.64$, and $\varphi4\geq-\varphi1*0.46+5.81$, where
$\varphi1$ is an initial phase of a first single-tone signal, $\varphi2$ is an initial phase of a second single-tone signal, $\varphi3$ is an initial phase of a third single-tone signal, and $\varphi4$ is an initial phase of a fourth single-tone signal.

With reference to the first aspect, in some implementations of the first aspect, a frequency separation between any two adjacent single-tone signals in the N single-tone signals is the same.

For example, N=4, the frequency of the first single-tone signal is -1.5 MHz, the frequency of the second single-tone signal is -0.5 MHz, the frequency of the third single-tone signal is 0.5 MHz, and the frequency of the fourth single-tone signal is 1.5 MHz. In this case, a frequency separation between any two adjacent single-tone signals in the four single-tone signals is the same.

With reference to the first aspect, in some implementations of the first aspect, when N=4, the frequency separation between any two adjacent single-tone signals in the N single-tone signals is 1 MHz.

For example, N=4, the frequency of the first single-tone signal is -1.5 MHz, the frequency of the second single-tone signal is -0.5 MHz, the frequency of the third single-tone signal is 0.5 MHz, and the frequency of the fourth single-tone signal is 1.5 MHz. Alternatively, the frequency of the first single-tone signal is -1 MHz, the frequency of the second single-tone signal is 0 MHz, the frequency of the third single-tone signal is 1 MHz, and the frequency of the fourth single-tone signal is 2 MHz.

With reference to the first aspect, in some implementations of the first aspect, when N=4, the frequency separation between any two adjacent single-tone signals in the N single-tone signals is 2 MHz.

For example, N=4, the frequency of the first single-tone signal is -3 MHz, the frequency of the second single-tone signal is -1 MHz, the frequency of the third single-tone signal is 1 MHz, and the frequency of the fourth single-tone signal is 3 MHz.

According to a second aspect, an apparatus for sending a multi-tone signal is provided, including: a processing unit, configured to generate a first multi-tone signal, where the first multi-tone signal includes N single-tone signals, amplitude values of the single-tone signals are the same, and initial phases of at least two of the N single-tone signals are the same, or absolute values of initial phases of at least two of the N single-tone signals are the same, where N is an integer greater than or equal to 2; and a transceiver unit, configured to send the first multi-tone signal.

With reference to the second aspect, in some implementations of the second aspect, the at least two single-tone signals with the same initial phases are symmetrical about a center frequency.

With reference to the second aspect, in some implementations of the second aspect, when N=4, initial phases of a first single-tone signal and a fourth single-tone signal are the same, and/or initial phases of a second single-tone signal and a third single-tone signal are the same, a frequency of the first single-tone signal is the smallest, a frequency of the fourth single-tone signal is the largest, and a frequency of the second single-tone signal is greater than the frequency of the first single-tone signal and less than a frequency of the third single-tone signal.

With reference to the second aspect, in some implementations of the second aspect, when N=8, one or more of the following are met: initial phases of a first single-tone signal and an eighth single-tone signal are the same, initial phases of a second single-tone signal and a seventh single-tone signal are the same, initial phases of a third single-tone signal and a sixth single-tone signal are the same, or initial phases of a fourth single-tone signal and a fifth single-tone signal are the same, where a frequency of the first single-tone signal is the smallest, a frequency of the eighth single-tone signal is the largest, a frequency of the third single-tone signal is greater than a frequency of the second single-tone signal and less than a frequency of the fourth single-tone signal, a frequency of the fifth single-tone signal is greater than the frequency of the fourth single-tone signal and less than a frequency of the sixth single-tone signal, and the frequency of the sixth single-tone signal is less than a frequency of the seventh single-tone signal.

With reference to the second aspect, in some implementations of the second aspect, when N=4, a PAPR of a signal is enabled to be less than or equal to 2 dB, and initial phases of the corresponding N single-tone signals meet any one of the following:

$\varphi2=\varphi3=0$, $1.59\leq\varphi1<1.86$, $\varphi4\geq-\varphi1+3.57$, and $\varphi4\leq-\varphi1*4/9+2.69$;
$\varphi2=\varphi3=0$, $1.86\leq\varphi1\leq1.98$, $\varphi4\geq-\varphi1+3.57$, and $\varphi4\leq-\varphi1*9/4+6.04$;
$\varphi2=\varphi3=0$, $4.3\leq\varphi1<4.42$, $\varphi4\leq-\varphi1+8.99$, and $\varphi2\geq-\varphi1*9/4+14.36$; or
$\varphi2=\varphi3=0$, $4.42\leq\varphi1<4.69$, $\varphi4\leq-\varphi1+8.99$, and $\varphi2\geq-\varphi1*4/9+6.38$, where
$\varphi1$ is an initial phase of a first single-tone signal, $\varphi2$ is an initial phase of a second single-tone signal, $\varphi3$ is an initial phase of a third single-tone signal, and $\varphi4$ is an initial phase of a fourth single-tone signal.

With reference to the second aspect, in some implementations of the second aspect, when N=4, a PAPR of a signal is enabled to be less than or equal to 2.5 dB, and initial phases of the corresponding N single-tone signals meet any one of the following:

$\varphi2=\varphi3=0$, $0\leq\varphi1<2.05$, $\varphi4\geq-\varphi1+\pi$, and $\varphi4\leq-\varphi1*0.53+\pi$;
$\varphi2=\varphi3=0$, $2.05\leq\varphi1\leq\pi$, $\varphi4\geq-\varphi1+\pi$, and $\varphi4<-\varphi1*1.88+5.9$;
$\varphi2=\varphi3=0$, $\pi\leq\varphi1<4.23$, $\varphi4\leq-\varphi1+9.42$, and $\varphi2\geq-\varphi1*1.88+12.18$; or
$\varphi2=\varphi3=0$, $4.23\leq\varphi1\leq2\pi$, $\varphi4\leq-\varphi1+9.42$, and $\varphi2\geq-\varphi1*0.53+6.47$, where
$\varphi1$ is an initial phase of a first single-tone signal, $\varphi2$ is an initial phase of a second single-tone signal, $\varphi3$ is an initial phase of a third single-tone signal, and $\varphi4$ is an initial phase of a fourth single-tone signal.

With reference to the second aspect, in some implementations of the second aspect, when N=4, a PAPR of a signal is enabled to be less than or equal to 3 dB, and initial phases of the corresponding N single-tone signals meet any one of the following:

$\varphi2=\varphi3=0$, $0\leq\varphi1<2.3$, $\varphi4\geq-\varphi1+2.92$, and $\varphi4\leq-\varphi1*0.46+3.36$;
$\varphi2=\varphi3=0$, $2.3\leq\varphi1<2.92$, $\varphi4\geq-\varphi1+2.92$, and $\varphi4\leq-\varphi1*2.17+7.29$;
$\varphi2=\varphi3=0$, $2.92\leq\varphi1<3.36$, $\varphi4\geq0$, and $\varphi4\leq-\varphi1*2.17+7.29$;
$\varphi2=\varphi3=0$, $2.92\leq\varphi1<3.36$, $\varphi4\leq2\pi$, and $\varphi2\geq-\varphi1*2.17+12.62$;
$\varphi2=\varphi3=0$, $3.36\leq\varphi1<3.98$, $\varphi4\leq-\varphi1+9.64$, and $\varphi4\geq-\varphi1*2.17+12.62$; or
$\varphi2=\varphi3=0$, $3.98\leq\varphi1<2\pi$, $\varphi4\leq-\varphi1+9.64$, and $\varphi4\geq-\varphi1*0.46+5.81$, where
$\varphi1$ is an initial phase of a first single-tone signal, $\varphi2$ is an initial phase of a second single-tone signal, $\varphi3$ is an initial phase of a third single-tone signal, and $\varphi4$ is an initial phase of a fourth single-tone signal.

With reference to the second aspect, in some implementations of the second aspect, a frequency separation between any two adjacent single-tone signals in the N single-tone signals is the same.

With reference to the second aspect, in some implementations of the second aspect, when N=4, the frequency separation between any two adjacent single-tone signals in the N single-tone signals is 1 MHz.

With reference to the second aspect, in some implementations of the second aspect, when N=4, the frequency separation between any two adjacent single-tone signals in the N single-tone signals is 2 MHz.

According to a third aspect, an apparatus for sending a multi-tone signal is provided, including a processor and a memory. Optionally, the apparatus may further include a transceiver. The memory is configured to store a computer program. The processor is configured to: invoke a computer program stored in the memory and run the computer program, and control the transceiver to receive and send a signal, so that an angle measurement apparatus performs the apparatus according to any one of the first aspect or the possible implementations of the first aspect.

According to a fourth aspect, an apparatus for sending a multi-tone signal is provided, including a processor and a communication interface. The communication interface is configured to receive data and/or information, and transmit the received data and/or information to the processor, and the processor processes the data and/or information; and the communication interface is further configured to output data and/or information processed by the processor, so that the apparatus according to any one of the first aspect or the possible implementations of the first aspect is performed.

According to a fifth aspect, a computer-readable storage medium is provided. The computer-readable storage medium stores computer instructions. When the computer instructions are run on a computer, the apparatus according to any one of the first aspect or the possible implementations of the first aspect is performed.

According to a sixth aspect, a computer program product is provided. The computer program product includes computer program code. When the computer program code is run on a computer, the apparatus according to any one of the first aspect or the possible implementations of the first aspect is performed.

## BRIEF DESCRIPTION OF DRAWINGS

FIG. 1 is a diagram of a structure of an angle of arrival positioning system to which this application is applicable;
FIG. 2 is a diagram of a structure of an angle of departure positioning system to which this application is applicable;
FIG. 3 is a diagram of up-converting a baseband multi-tone signal into a radio frequency multi-tone signal according to an embodiment of this application;
FIG. 4 is a diagram of a representation form of a baseband single-tone signal according to an embodiment of this application;
FIG. 5 is a diagram of a representation form of another baseband single-tone signal according to an embodiment of this application;
FIG. 6 is a schematic flowchart of an apparatus for determining a multi-tone signal according to an embodiment of this application;
FIG. 7 to FIG. 9 are diagrams of a multi-tone signal (N=3) design solution according to an embodiment of this application;
FIG. 10 to FIG. 13 are diagrams of a multi-tone signal (N=4) design solution according to an embodiment of this application;
FIG. 14 to FIG. 16 are diagrams of a multi-tone signal (N=5) design solution according to an embodiment of this application;
FIG. 17 to FIG. 19 are diagrams of a multi-tone signal (N=6) design solution according to an embodiment of this application;
FIG. 20 to FIG. 22 are diagrams of a multi-tone signal (N=7) design solution according to an embodiment of this application;
FIG. 23 to FIG. 25 are diagrams of a multi-tone signal (N=8) design solution according to an embodiment of this application;

FIG. 26 is a diagram of counterclockwise rotation of a multi-tone signal by $\Delta\varphi$ according to an embodiment of this application;

FIG. 27 is a diagram of translation of a multi-tone signal on a time axis by $\Delta t$ according to an embodiment of this application;

FIG. 28 is a diagram of a structure of an apparatus for sending a multi-tone signal according to an embodiment of this application; and

FIG. 29 is a diagram of a structure of another apparatus for sending a multi-tone signal according to an embodiment of this application.

## DESCRIPTION OF EMBODIMENTS

The following describes technical solutions of this application with reference to the accompanying drawings.

The technical solutions of this application may be applied to a wireless personal area network (wireless personal area network, WPAN). Currently, a standard used for the WPAN is the institute of electrical and electronics engineers (institute of electrical and electronics engineers, IEEE) 802.15 series. The WPAN may be used for communication between digital auxiliary devices in a small range, such as a telephone, a computer, and an auxiliary device. Technologies that support the wireless personal area network include Bluetooth (Bluetooth), ZigBee (ZigBee), ultra wideband (ultra wideband, UWB), an infrared data association (infrared data association, IrDA) connection technology, home radio frequency (home radio frequency, HomeRF), and the like. From a perspective of network composition, the WPAN is located at a bottom layer of an entire network architecture and is used for a wireless connection between devices in a small range, that is, a point-to-point short-range connection, and may be considered as a short-range wireless communication network. Based on different application scenarios, WPANs are further classified into high rate (high rate, HR)-WPANs and low rate (low rate, LR)-WPANs. The HR-WPAN may be used to support various high-rate multimedia applications, including high-quality audio and video delivery, multi-megabyte music and image document transmission, and the like. The LR-WPAN may be for common services in daily life.

In the WPAN, devices may be classified into a full-function device (full-function device, FFD) and a reduced-function device (reduced-function device, RFD) based on communication capabilities of the devices. The FFDs can communicate with each other and an FFD can communicate with an RFD. The RFDs cannot directly communicate with each other. An RFD can communicate only with an FFD or forward data through one FFD. The FFD associated with the RFD is referred to as a coordinator (coordinator) of the RFD. The RFD is mainly used for simple control application, for example, a light switch and a passive infrared sensor. A small amount of data is transmitted, and small quantities of transmission resources and communication resources are occupied. Therefore, costs of the RFD are low. The coordinator may also be referred to as a personal area network (personal area network, PAN) coordinator, a central control node, or the like. The PAN coordinator is a main control node of an entire network, and each ad hoc network can have only one PAN coordinator, which has functions of member identity management, link information management, and packet forwarding.

Optionally, a device (for example, a sending device or a receiving device) in embodiments of this application may be a device supporting the 802.15 series, for example, a device supporting a plurality of WPAN standards such as 802.15.4a, 802.15.4z, and a WPAN standard under discussion or a WPAN standard in a subsequent version.

In embodiments of this application, the device may be a communication server, a router, a switch, a bridge, a computer, a mobile phone, a home smart device, a vehicle-mounted communication device, or the like.

In embodiments of this application, the device may be a wireless communication chip, a wireless sensor, or a wireless communication terminal, for example, a user terminal, a user apparatus, an access apparatus, a subscriber station, a subscriber unit, a mobile station, a user agent, and user equipment that support a Wi-Fi communication function. The user terminal may include various handheld devices, vehicle-mounted devices, wearable devices, internet of things (internet of things, IoT) devices, or computing devices that have a wireless communication function, or another processing device connected to a wireless modem, user equipment (user equipment, UE) of various forms, a mobile station (mobile station, MS), a terminal (terminal), terminal equipment (terminal equipment), a portable communication device, a handheld device, a portable computing device, an entertainment device, a game device or system, a global positioning system device, or any other appropriate device configured to perform network communication via a wireless medium. In addition, the device may support the 802.15.4ab standard or a next-generation standard of 802.15.4ab. The device may further support a plurality of standards, such as 802.15.4a, 802.15.4-2011, 802.15.4-2015, and 802.15.4z. The device may further support a plurality of wireless local area network (wireless local area network, WLAN) standards of the 802.11 family, for example, the 802.11ax, 802.11ac, 802.11n, 802.11g, 802.11b, 802.11a, and a next generation of the 802.11be.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing by using a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the apparatus provided in embodiments of this application is not particularly limited in embodiments of this application, provided that a program that records code of the apparatus provided in embodiments of this application can be run to perform communication according to the apparatus provided in embodiments of this application. For example, the execution body of the apparatus provided in embodiments of this application may be an FFD or an RFD, or a functional module that is in the FFD or the RFD and that can invoke and execute a program.

In addition, aspects or features of this application may be implemented as an apparatus, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a wireless channel, and various other media that can store, include, and/or carry instructions and/or data.

The technical solutions of this application are further applicable to a wireless local area network system, for example, an internet of things (internet of things, IoT) network or a vehicle-to-everything (Vehicle to X, V2X) network. Certainly, embodiments of this application may be further applicable to another possible communication system, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) communication system, and a future 6th generation (6th generation, 6G) communication system.

It should be understood that the AoA or the AoD has been used in a low-power wireless narrowband technology, and the technical solutions provided in this application are applicable to a Bluetooth indoor positioning system. The Bluetooth indoor positioning system may be used in an indoor navigation device. For example, a Bluetooth band is used as a navigation terminal to effectively resolve a problem that a blind person cannot quickly, safely, and conveniently reach a target place from a current position during an indoor activity, especially a travel problem in a public place, for example, a hospital, a subway station, or a shopping mall. The following uses Bluetooth BLE AoA or AoD as an example to describe a basic principle of the AoA or the AoD.

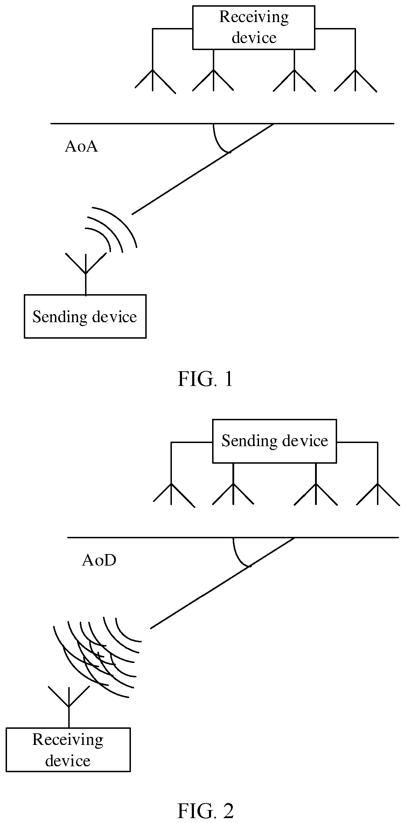

FIG. 1 is a diagram of a structure of an AoA positioning system to which this application is applicable. As shown in FIG. 1, a sending device and a receiving device are included. The sending device has one antenna, and the receiving device has two or more antennas (for example, four antennas).

For example, during Bluetooth BLE AoA angle measurement, the sending device sends a single-tone signal, that is, a special Bluetooth signal whose baseband is a sine wave, and the signal is referred to as constant tone extension (constant tone extension, CTE) in the Bluetooth protocol. In a process of receiving the CTE single-tone signal, the receiving device continuously switches between the antennas, and simultaneously samples baseband signals (including phase information) of the antennas, that is, measures a phase of a signal corresponding to each antenna. A processor in the receiving device may calculate an angle of the AoA by comparing phase differences between the antennas.

FIG. 2 is a diagram of a structure of an AoD positioning system to which this application is applicable. As shown in FIG. 2, a sending device and a receiving device are included. The receiving device has one antenna, and the sending device has two or more antennas (for example, four antennas).

For example, during Bluetooth BLE AoD angle measurement, the sending device sends a CTE signal, and continuously switches between the antennas. In a process of receiving the CTE single-tone signal, the receiving device determines a transmit antenna corresponding to each part of the CTE signal, and samples a baseband signal corresponding to each antenna. A processor in the receiving device performs angle calculation based on the baseband signal of each antenna obtained through sampling.

It should be understood that the AoA or AoD positioning systems shown in FIG. 1 and FIG. 2 are merely examples for description. This is not specifically limited in this application. The system is not limited to including more other devices, for example, other receiving devices.

Currently, the low-power narrowband wireless technology (such as Bluetooth and ZigBee) is increasingly widely used in daily life. Compared with other wireless technologies such as 5G and Wi-Fi, the low-power narrowband wireless technology has the following advantages: (1) quite low power consumption, which means that the device can be used for a longer time; and (2) the design is simpler and the device cost is lower. Therefore, the low-power narrowband wireless technology is not only widely used in consumer devices (such as a mobile phone, a wearable device, and a smart household appliance), but also widely used in the industrial internet of things (industrial internet of things, IIoT). The low-power narrowband wireless technology not only has a device connection function, but also has a function of measuring a direction between devices (that is, measuring an AoA or an AoD), and may be used to implement indoor positioning of a device. For example, a Bluetooth AoA or AoD characteristic is used as a representative AoA or AoD protocol in the low-power narrowband wireless technology, so that the Bluetooth AoA or AoD indoor positioning system becomes increasingly popular. ZigBee devices of some vendors may support an MCPD ranging technology, which is used to obtain a distance between two devices. Direction and/or distance information may be used to calculate a position of a device.

It should be understood that both AoA or AoD ranging and ZigBee MCPD ranging are performed in a manner of sending a single-tone (or a carrier) signal, so that a receiving device performs phase measurement on a frequency. To improve direction-finding and ranging accuracy, phase measurement needs to be performed on a plurality of frequencies. For example, in ZigBee ranging, phase measurement is performed for 80 times at a frequency separation of 1 MHz on the 2.4 GHz industrial scientific medical band ISM, to cover the entire 80 MHz band. Similarly, in Bluetooth AoA or AoD ranging, phase measurement is performed for 37 times at a frequency separation of 2 MHz, to cover an approximately 80 MHz band of Bluetooth on the 2.4 GHz ISM, and a separation between two adjacent channels (or frequencies) is 2 MHz. It should be noted that a band that can be used for BLE AoA or AoD is 2.404 GHz to 2.478 GHz. In addition, for other content of Bluetooth BLE AoA or AoD, refer to the existing Bluetooth 5.1 protocol. For brevity, details are not described herein.

Considering that both Bluetooth AoA/AoD and ZigBee MCPD use a single-tone (or one carrier) signal for phase measurement, a phase of only one frequency in the entire ISM band can be measured at a time. As a result, it takes a long time to complete measurement of the entire band. To reduce a phase measurement time of the AoA or AoD and MCPD ranging of a low-power narrowband device, a multi-tone signal may be sent, that is, a radio frequency signal sent by an antenna of the device may cover a multi-tone signal of a plurality of frequencies (or considered as a plurality of carrier signals or a plurality of single-tone signals).

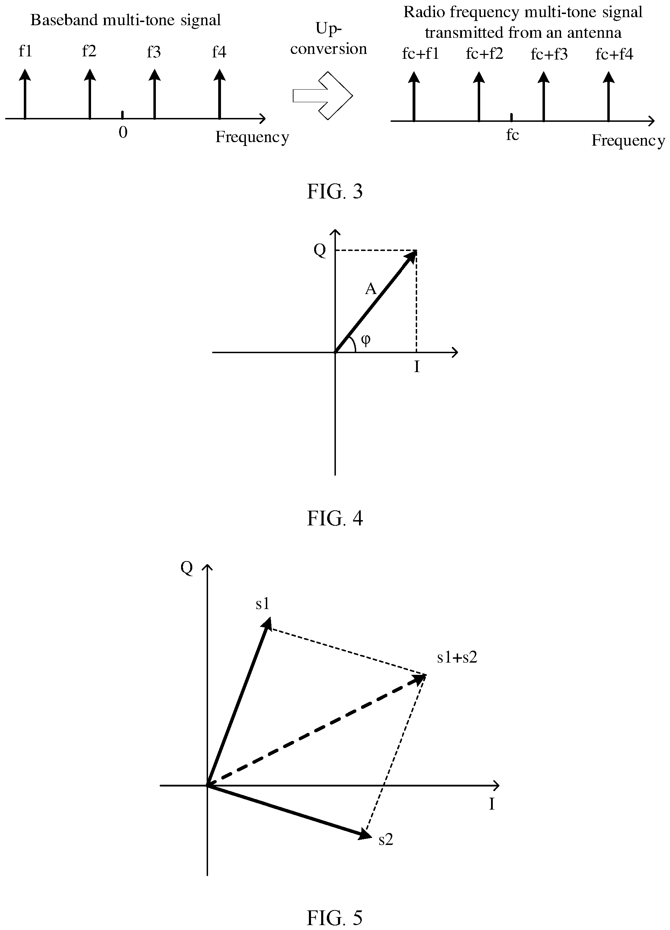

FIG. 3 is a diagram of up-converting a baseband multi-tone signal into a radio frequency multi-tone signal according to an embodiment of this application. As shown in FIG. 3, a radio frequency multi-tone signal on the right side may be obtained by up-converting a baseband multi-tone signal on the left side. For example, assuming that frequencies corresponding to the baseband multi-tone signal (N=4, that is, a quantity of tones is 4) are respectively f1=-1.5 MHz, f2=-0.5 MHz, f3=0.5 MHz, and f4=1.5 MHz, when the baseband multi-tone signal and a carrier signal (assuming that a frequency fc is 2.4515 GHz) are input to a frequency mixer for frequency mixing, the baseband multi-tone signal may be up-converted into a multi-tone signal of an ISM band, that is, the frequencies are respectively: f1+fc=2.450 GHz, f2+fc=2.451 GHz, f3+fc=2.452 GHz, and f4+fc=2.453 GHz. In this way, phase values of four frequencies: 2.450 GHz, 2.451 GHz, 2.452 GHz, and 2.453 GHz can be measured simultaneously. In comparison with conventional Bluetooth AoA/AoD and ZigBee MCPD ranging solutions, when a multi-tone signal is used for phase measurement in AoA/AoD or MCPD ranging, an overall measurement time and required power consumption can be greatly reduced.

It should be noted that, to perform uniform sampling on the entire ISM band, amplitudes of all tones of the baseband multi-tone signal are set to a same value, and a frequency separation between two adjacent tones is the same.

It should be understood that information about a baseband signal includes an amplitude and a phase. The following describes a baseband single-tone signal by using two representation forms shown in FIG. 4 and FIG. 5. For example, the amplitude (A) and the phase ($\varphi$) information of the baseband signal may be described in a form of (In-phase & Quadrature, IQ), that is, $I = A \cdot \cos\varphi$, $Q = A \cdot \sin\varphi$; or the IQ signal may be represented in a form of a complex number, that is, $s = I + j \cdot Q$.

Specifically, as shown in FIG. 4, when the baseband signal is a single-tone signal (that is, a sine wave), the amplitude of the signal is fixed, and the phase $\varphi$ and a time t meet: $\varphi = 2\pi ft + \varphi_{ini}$, where f is a frequency of the signal, and $\varphi_{ini}$ is an initial phase of the signal (that is, a phase of the signal when t=0). Therefore, the IQ of the baseband single-tone signal may be represented as: $I = A \cdot \cos(2\pi ft + \varphi_{ini})$, $Q = A \cdot \sin(2\pi ft + \varphi_{ini})$. When the frequency f of the signal is positive, the phase $\varphi$ increases with the time t, that is, the signal rotates counterclockwise with the time t in an IQ plane. On the contrary, when the frequency f of the signal is negative, the signal rotates clockwise with the time t in the IQ plane.

Specifically, as shown in FIG. 5, when two baseband single-tone signals s1 and s2 are added, a parallelogram rule may be used to obtain a sum s1+s2 of the two baseband single-tone signals (that is, addition of complex numbers). It should be understood that the amplitude of the baseband single-tone signal is fixed. For example, the amplitude of the foregoing signal $I = A \cdot \cos(2\pi ft + \varphi_{ini})$, $Q = A \cdot \sin(2\pi ft + \varphi_{ini})$ is always A, and does not change with time. For a multi-tone signal, an IQ of the multi-tone signal is a sum of IQs of all tones (that is, complex number addition of all IQs), and an amplitude of the multi-tone signal changes with time.

For example, frequencies of single-tone signals in a multi-tone signal in which N=4 (that is, four tones) are respectively: f1=-1.5 MHz, f2=-0.5 MHz, f3=0.5 MHz, and f4=1.5 MHz, an amplitude of each tone is 1, and an initial phase of each tone is 0. It may be obtained that a maximum amplitude value of the multi-tone signal is 4, and a corresponding maximum power is 4*4=16. Because power of each tone is 1 (the amplitude of each tone is always 1), an average power of the multi-tone signal is 4. Therefore, a peak-to-average-power ratio PAPR of the multi-tone signal is equal to $10 \cdot \log_{10}(16 / 4) = 6.02 dB$. Assuming that a maximum power of a PA of the sending device is 10 dBm, an average power for sending the multi-tone signal may be set to 10-6.02=3.98 dBm at most. Otherwise, the peak power may exceed an upper limit of the PA, causing distortion of the signal sent by the PA.

In conclusion, a larger PAPR of the multi-tone signal indicates a smaller average power for sending the signal. Therefore, a multi-tone signal urgently needs to be designed to ensure that a PAPR of the signal is low to a greatest extent, so that optimal average transmit power can be obtained.

In view of this, this application provides a method and an apparatus for sending a multi-tone signal. Different multi-tone signals are designed by changing initial phases, so that a PAPR of the signal is small to a greatest extent, thereby increasing average power for sending the multi-tone signal, and helping increase a transmission distance or coverage of the multi-tone signal. Specifically, for multi-tone signals with different quantities of tones, corresponding waveform designs (that is, initial phases of the tones) are separately found, so that a PAPR of the multi-tone signal is the lowest.

For ease of understanding of embodiments of this application, terms or technologies in this application are briefly described.

1. AoA

A low energy (low energy, LE) device can make a direction of the device available to a peer device by sending data packets with a direction-finding function by using a single antenna. The peer device includes a radio frequency switch and an antenna array, and switches antennas and obtains IQ samples when receiving some data packets. The IQ samples may be used to calculate a phase difference between radio signals received by different elements of the antenna array, and may be further used to estimate an angle of arrival AoA.

2. AoD

When sending data packets with a direction-finding function by using a plurality of antennas, an LE device can make a direction of the device available to a peer device by switching the antennas when sending the data packets. The peer device includes a radio frequency switch and a single antenna, receives data packets sent by the antennas, obtains IQ samples, and calculates a phase difference between the antennas based on IQs of the antennas, so as to estimate an angle of departure AoD.

3. Narrowband signal

In this application, the "narrowband signal" is relative to an "ultra-wideband signal." A bandwidth of the ultra-wideband signal is usually at least 500 MHz, and a signal whose bandwidth is less than the bandwidth of the ultra-wideband signal is the narrowband signal. Optionally, narrowband signals include but are not limited to signals provided by the following wireless technologies: a Bluetooth technology, a ZigBee technology, a technology based on the 802.15.4 standard (for example, a Thread technology), a Wi-Fi technology (including various standards of 802.11), and the like. The wireless technologies may further include the narrow band internet of things (narrow band internet of things NB-IoT), long term evolution-machine to machine (long term evolution-machine to machine, LTE-M), LoRa, Sigfox, and other wireless technologies in a cellular system, other wireless technologies that can provide narrowband signals in the future, and the like. This is not limited.

4. Up-conversion and down-conversion

Up-conversion means that a spectrum of a baseband signal is translated to a required high carrier frequency. In other words, up-conversion means to modulate a baseband signal to a carrier, or converting a signal modulated on a low-frequency carrier to a high-frequency carrier. Specifically, a frequency-converted signal is mixed with a sine signal (a local-oscillator) generated by a local oscillator (local oscillator, LO), to change a band of the signal. Obtaining an upper sideband signal after frequency mixing is up-conversion, that is, a frequency is increased; and obtaining a lower sideband signal after frequency mixing is down-conversion, that is, a frequency is reduced.

5. Single-tone signal and multi-tone signal

The single-tone signal is a sine wave of a frequency, that is, the single-tone signal has only one spectral line. The multi-tone signal is generated by superimposing a plurality of independent sinusoidal signal waveforms, that is, the multi-tone signal has a plurality of spectral lines.

For ease of understanding embodiments of this application, the following points are described.

First, in this application, unless otherwise stated or there is a logic conflict, terms and/or descriptions between different embodiments are consistent and may be mutually referenced, and technical features in different embodiments may be combined into a new embodiment based on an nternal logic relationship thereof.

Second, in this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" usually indicates an "or" relationship between associated objects. "At least one of the following items (pieces)" or a similar expression thereof means any combination of these items, including any combination of singular items (pieces) or plural items (pieces). For example, at least one of a, b, and c may indicate a, b, c, a and b, a and c, b and c, or a, b, and c. Each of a, b, and c may be singular or plural.

Third, in this application, "first", "second", and various numbers (for example, #1 and #2) are merely used for distinguishing for ease of description and are not intended to limit the scope of embodiments of this application, for example, distinguishing different messages or the like, rather than describing a particular order or sequence. It should be understood that objects described in such a way are interchangeable in an appropriate circumstance, so that a solution other than embodiments of this application can be described.

Fourth, in this application, descriptions such as "when ...", "in a case of ...", and "if" all mean that a device performs corresponding processing in a specific objective situation, and are not intended to limit time. The descriptions do not mean that the device is required to have a determining action during implementation, and do not mean any other limitation.

Fifth, the terms "include", "have" and any other variants thereof in this application are intended to cover non-exclusive inclusion. For example, a process, an apparatus, a system, a product, or a device that includes a series of steps or units is not limited to those clearly listed steps or units, but may include other steps or units that are not clearly listed or are inherent to such a process, apparatus, product, or device.

Sixth, in this application, the "protocol" may mean a standard protocol in the communication field, for example, may include a 5G protocol, a Bluetooth protocol, and a related protocol applied to a future communication system. This is not limited in this application.

Seventh, in this application, a frequency is a specific absolute frequency value, and is usually a center frequency of a modulated signal. It should be understood that a frequency is a number assigned to a fixed frequency. A band is a range from one frequency to another frequency.

Eighth, in embodiments of this application, the character "*" is an operation symbol, and represents a product.

The technical solutions provided in this application are described in detail below with reference to the accompanying drawings.

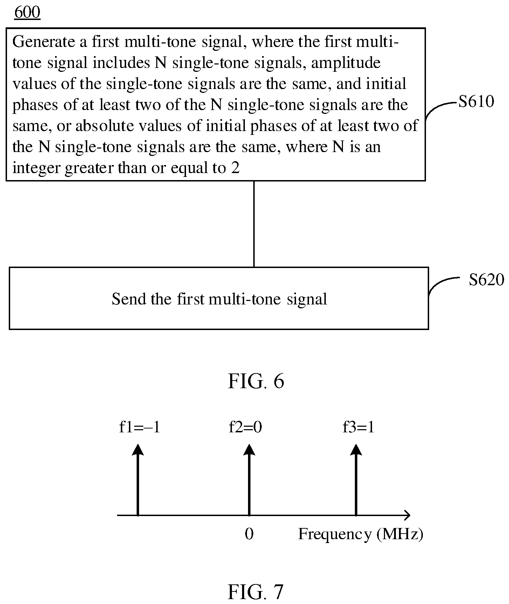

FIG. 6 is a schematic flowchart of a first method for sending a multi-tone signal according to an embodiment of this application. As shown in FIG. 6, the apparatus includes the following steps.

S610: Generate a first multi-tone signal.

The first multi-tone signal includes N single-tone signals, amplitude values of the single-tone signals are the same, and initial phases of at least two of the N single-tone signals are the same, or absolute values of initial phases of at least two of the N single-tone signals are the same, where N is an integer greater than or equal to 2.

It should be noted that, to ensure that frequencies are evenly distributed during AoA, AoD, and MCPD ranging measurement, amplitudes of all tones of a baseband multi-tone signal considered in this application are the same, and a frequency separation between two adjacent tones is the same. For ease of analysis, amplitudes of all tones in the multi-tone signal shown in this application are normalized to 1.

For example, N=4, and the initial phases of the first multi-tone signal may be 1.81, 0, 0, and 1.81. Alternatively, the initial phases of the first multi-tone signal may be 4.47, 0, 0, and 4.47. Alternatively, the initial phases of the first multi-tone signal may be -0.08, -0.63, 0.63, 3.70, and the like. This is not specifically limited in this application.

Optionally, the at least two single-tone signals with the same initial phases are symmetrical about a center frequency.

For example, N=4, an initial phase $\varphi1$ of a first single-tone signal is 1.81, an initial phase $\varphi2$ of a second single-tone signal is 0, an initial phase $\varphi3$ of a third single-tone signal is 0, and an initial phase $\varphi4$ of a fourth single-tone signal is 1.81. Correspondingly, a frequency of the first single-tone signal is -1.5 MHz, a frequency of the second single-tone signal is -0.5 MHz, a frequency of the third single-tone signal is 0.5 MHz, and a frequency of the fourth single-tone signal is 1.5 MHz. To be specific, the first single-tone signal and the fourth single-tone signal are symmetrical about the center frequency, and the second single-tone signal and the fourth single-tone signal are symmetrical about the center frequency.

The following describes a design solution of the multi-tone signal with reference to FIG. 7 to FIG. 9 by using an example in which a quantity of tones in the multi-tone signal is equal to 3 (N=3).

As shown in FIG. 7, a frequency of a first single-tone signal in the multi-tone signal is the smallest, for example, f1=-1 MHz, a frequency of a third single-tone signal is the largest, for example, f3=1 MHz, and a frequency of a second single-tone signal is between the frequency of the first single-tone signal and the frequency of the third single-tone signal, for example, f2=0 MHz. A frequency separation of the multi-tone signal is 1 MHz, and amplitudes of all tones are the same.

It should be noted that an initial phase value of each single-tone signal ranges from 0 to $2\pi$. The lowest PAPR of the multi-tone signal may be determined by traversing the initial phases of the tones, and a corresponding initial phase combination is recorded at the same time. For example, assuming that $\varphi 1$, $\varphi 2$, and $\varphi 3$ are respectively initial phases of the multi-tone signal whose frequencies are f1, f2, and f3, when $\varphi 1=0$ and $\varphi 3=0$, by traversing the initial phase $\varphi 2$, it may be found that a PAPR corresponding to $\varphi 2=1.57$ or $\varphi 2=4.71$ is the lowest value, that is, 2.22 dB. In comparison with a PAPR corresponding to a conventional multi-tone signal being 10*lg(3*3/3)=4.77 dB (an initial phase of each tone is 0), this implementation can obtain a gain of 4.77 dB-2.22 dB=2.55 dB. To be specific, "$\varphi 1=0$, $\varphi 2=1.57$, $\varphi 3=0$" and "$\varphi 1=0$, $\varphi 2=4.71$, $\varphi 3=0$" are used as optimal initial phase combinations of the multi-tone signal in which N=3 (f1=-1 MHz, f2=0 MHz, f3=1 MHz).

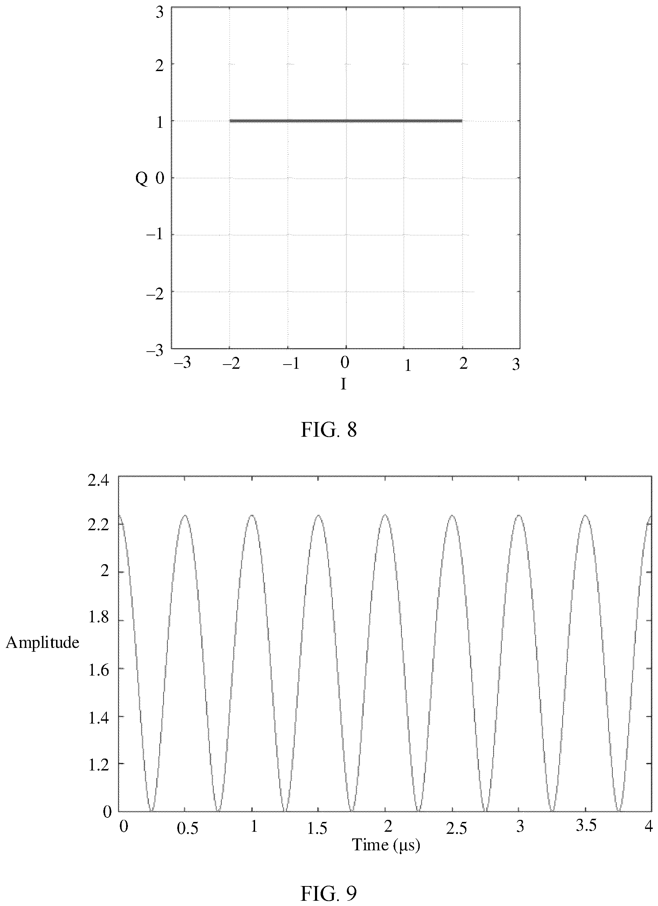

FIG. 8 shows a change track of a multi-tone signal corresponding to the foregoing optimal initial phase combination "$\varphi 1=0$, $\varphi 2=1.57$, $\varphi 3=0$" in an IQ plane (it is assumed that an amplitude of each tone is 1). As shown in FIG. 8, as time increases, the IQ of the multi-tone signal moves back and forth on a "straight line" track.

FIG. 9 is a diagram of changes with time of an amplitude of the multi-tone signal corresponding to the foregoing optimal initial phase combination "$\varphi 1=0$, $\varphi 2=1.57$, $\varphi 3=0$". As shown in FIG. 9, a maximum amplitude value of the multi-tone signal is 2.24, and a corresponding PAPR is 2.22 dB.

It should be noted that, based on the foregoing two groups of optimal initial phase values "$\varphi 1=0$, $\varphi 2=1.57$, $\varphi 3=0$" and "$\varphi 1=0$, $\varphi 2=4.71$, $\varphi 3=0$" that are used as two groups of "basic optimal initial phase combinations", various other optimal initial phase combinations may be derived. Details are described below, and details are not described herein.

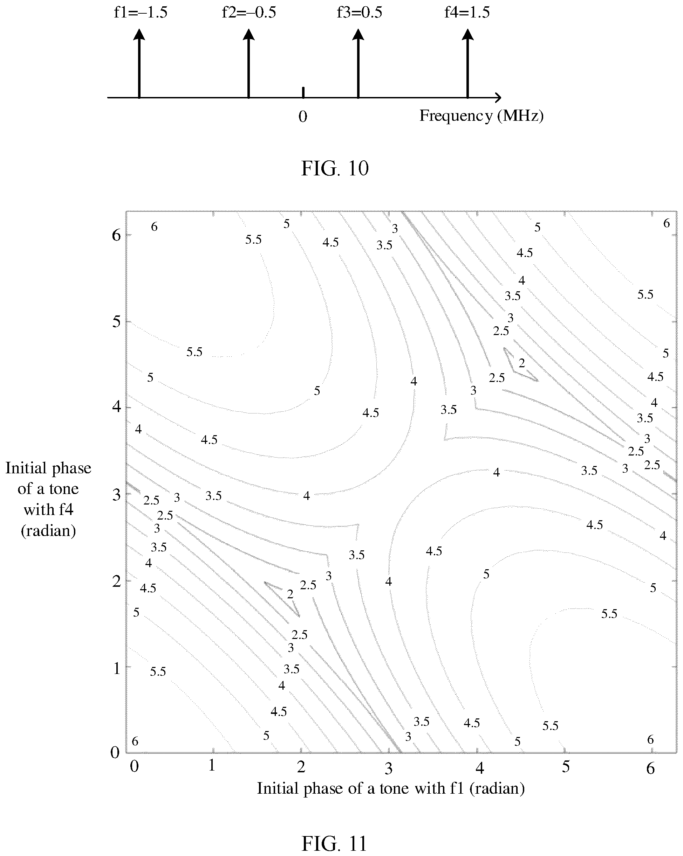

The following describes a design solution of the multi-tone signal with reference to FIG. 10 to FIG. 13 by using an example in which a quantity of tones in the multi-tone signal is equal to 4.

As shown in FIG. 10, a frequency of a first single-tone signal in the multi-tone signal is -1.5 MHz, a frequency of a second single-tone signal is -0.5 MHz, a frequency of a third single-tone signal is 0.5 MHz, and a frequency of a fourth single-tone signal is 1.5 MHz. A frequency separation of the multi-tone signal is 1 MHz, and amplitudes of all tones are the same.

The lowest PAPR value of the multi-tone signal may be determined as 1.84 dB by traversing the initial phases of the tones, and a corresponding initial phase combination is recorded at the same time. For example, it is assumed that $\varphi 1$, $\varphi 2$, $\varphi 3$, and $\varphi 4$ are respectively initial phases of the multi-tone signal whose frequencies are f1, f2, f3, and f4. When $\varphi 2=0$ and $\varphi 3=0$, corresponding PAPR contour line results are obtained by traversing two initial phases $\varphi 1$ and $\varphi 4$. For details, refer to FIG. 11. It may be found that a PAPR corresponding to "$\varphi 1=\varphi 4=1.81$" or "$\varphi 1=\varphi 4=4.47$" is the lowest value, that is, 1.84 dB. In comparison with a PAPR corresponding to a conventional multi-tone signal being 10*log(4*4/4)=6.02 dB (an initial phase of each tone is 0), this implementation can obtain a gain of 6.02 dB-1.84 dB=4.18 dB.

To be specific, "$\varphi 1=1.81$, $\varphi 2=0$, $\varphi 3=0$, $\varphi 4=1.81$" and "$\varphi 1=4.47$, $\varphi 2=0$, $\varphi 3=0$, $\varphi 4=4.47$" are used as optimal initial phase combinations of the multi-tone signal in which N=4 (f1=-1.5 MHz, f2=-0.5 MHz, f3=0.5 MHz, f4=1.5 MHz).

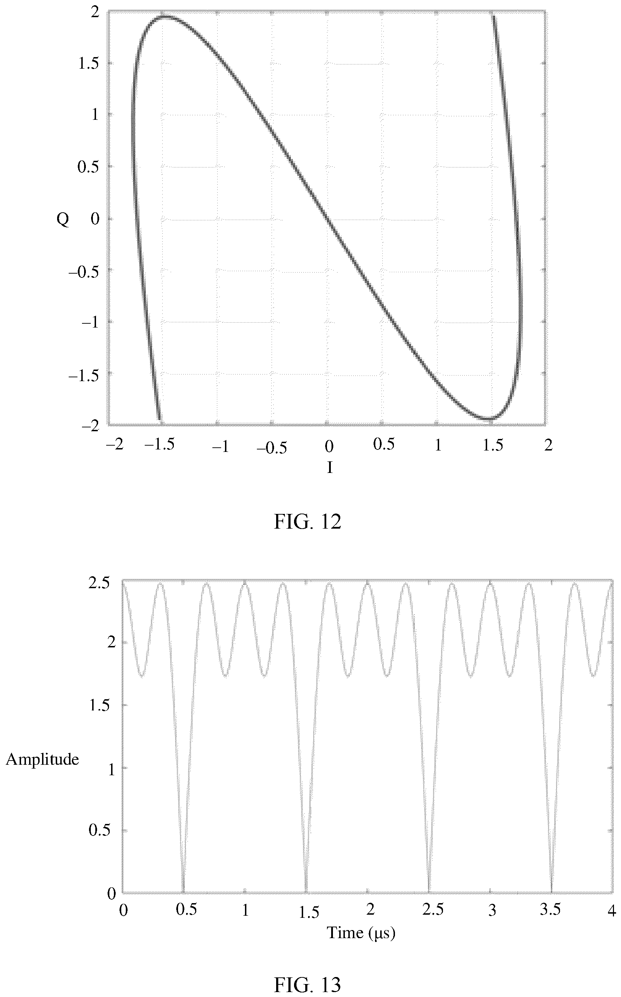

FIG. 12 shows a change track of a multi-tone signal corresponding to the foregoing optimal initial phase combination "$\varphi 1=1.81$, $\varphi 2=0$, $\varphi 3=0$, $\varphi 4=1.81$" in an IQ plane (it is assumed that an amplitude of each tone is 1). As shown in FIG. 12, as time increases, the IQ of the multi-tone signal moves back and forth on a track similar to the letter "N", and it takes 2 $\mu$s for one-cycle movement.

FIG. 13 is a diagram of changes with time of an amplitude of the multi-tone signal corresponding to the foregoing optimal initial phase combination "$\varphi 1=1.81$, $\varphi 2=0$, $\varphi 3=0$, $\varphi 4=1.81$". As shown in FIG. 13, a maximum amplitude value of the multi-tone signal is 2.47, and a corresponding PAPR is 1.84 dB.

It should be noted that, based on the foregoing two groups of optimal initial phase values "$\varphi 1=1.81$, $\varphi 2=0$, $\varphi 3=0$, $\varphi 4=1.81$" and "$\varphi 1=4.47$, $\varphi 2=0$, $\varphi 3=0$, $\varphi 4=4.47$" that are used as two groups of "basic optimal initial phase combinations", various other optimal initial phase combinations may be derived. Details are described below, and details are not described herein.

As shown in FIG. 11, when $\varphi 2=0$ and $\varphi 3=0$, the two initial phases $\varphi 1$ and $\varphi 4$ are traversed to obtain corresponding PAPR contour line results.

In a possible implementation, when the PAPR is less than or equal to 2 dB, corresponding value ranges of $\varphi 1$ and $\varphi 4$ include the following cases:

(1) A shape similar to a triangle (lower left) corresponding to a contour line PAPR=2 dB, where initial phase values respectively corresponding to three vertices are: ($\varphi 1=1.59$, $\varphi 4=1.98$), ($\varphi 1=1.98$, $\varphi 4=1.59$), and ($\varphi 1=1.86$, $\varphi 4=1.86$).

Specifically, when $1.59 \leq \varphi 1 < 1.86$, $\varphi 4 \geq -\varphi 1+3.57$ and $\varphi 4 \leq -\varphi 1*4/9+2.69$; or
when $1.86 \leq \varphi 1 \leq 1.98$, $\varphi 4 \geq -\varphi 1+3.57$ and $\varphi 4 \leq -\varphi 1*9/4+6.04$.

(2) A shape similar to a triangle (upper right) corresponding to a contour line PAPR=2 dB, where initial phase values respectively corresponding to three vertices are: ($\varphi 1=4.3$, $\varphi 4=4.69$), ($\varphi 1=4.69$, $\varphi 4=4.3$), and ($\varphi 1=4.42$, $\varphi 4=4.42$).

Specifically, when $4.3 \leq \varphi 1 < 4.42$, $\varphi 4 \leq \varphi 1+8.99$ and $\varphi 4 \geq -\varphi 1*9/4+14.36$; or

when 4.42≤φ1<4.69, φ4≤-φ1+8.99 and φ4≥-φ1*4/9+6.38.

In another possible implementation, when the PAPR is less than or equal to 2.5 dB, corresponding value ranges of φ1 and φ4 include the following cases:

(1) A shape similar to a triangle (lower left) corresponding to a contour line PAPR=2.5 dB, where initial phase values respectively corresponding to three vertices are: (φ1=0, φ4=π), (φ1=π, φ4=0), and (φ1=2.05, (φ4=2.05).

Specifically, when 0≤φ1<2.05, φ4≥-φ1+π and φ4≤-φ1*0.53+π; or
when 2.05≤φ1≤π, φ4≥-φ1+π and φ4≤-φ1*1.88+5.9.

(2) A shape similar to a triangle (upper right) corresponding to a contour line PAPR=2.5 dB, where initial phase values respectively corresponding to three vertices are: (φ1=π, φ4=2π), (φ1=2π, φ4=π), and (φ1=4.23, φ4=4.23).

Specifically, when π≤φ1<4.23, φ4≤-φ1+9.42 and φ4≥-φ1*1.88+12.18; or
when 4.23≤φ1≤2π, φ4≤-φ1+9.42 and φ4≥-φ1*0.53+6.47.

In another possible implementation, when the PAPR is less than or equal to 3 dB, corresponding value ranges of φ1 and φ4 include the following cases:

(1) A shape similar to a pentagon (lower left) corresponding to a contour line PAPR=3 dB, where initial phase values respectively corresponding to five vertices are: (φ1=0, φ4=2.92), (φ1=0, φ4=3.36), (φ1=2.3, φ4=2.3), (φ1=3.36, φ4=0), and φ1=2.92, φ4=0).

Specifically, when 0≤φ1<2.3, φ4≥-φ1+2.92 and φ4≤-φ1*0.46+3.36;
when 2.3≤φ1<2.92, φ4≥-φ1+2.92 and φ4≤φ1*2.17+7.29; or
when 2.92≤φ1<3.36, φ4≥0 and φ4≤-φ1*2.17+7.29.

(2) A shape similar to a pentagon (upper right) corresponding to a contour line PAPR=3 dB, where initial phase values respectively corresponding to five vertices are: σ1=2π, φ4=3.36), (φ1=2π, φ4=2.92), (φ1=3.98, φ4=3.98), (φ1=2.92, φ4=2π), and (φ1=3.36, φ4=2π).

Specifically, when 2. 92:S<pl <3.36, φ4≤2π and φ4≥-φ1*2.17+12.62;
when 3.36≤φ1<3.98, cp4<-cpl+9.64 and φ4≥-φ1*2.17+12.62; or
when 3.98≤φ1<2π, cp4<-cpl+9.64 and <p42:-<pl *0.46+5.81.

Based on the foregoing implementation, if an initial phase of a multi-tone signal does not fall within an initial phase range corresponding to a PAPR less than or equal to 3 dB, a PAPR of the multi-tone signal is higher than a PAPR corresponding to the multi-tone signal provided in this application by at least 3-1.84=1.16 dB, and correspondingly, the average power for sending the signal is also lower than that in this application by at least 1.16 dB.

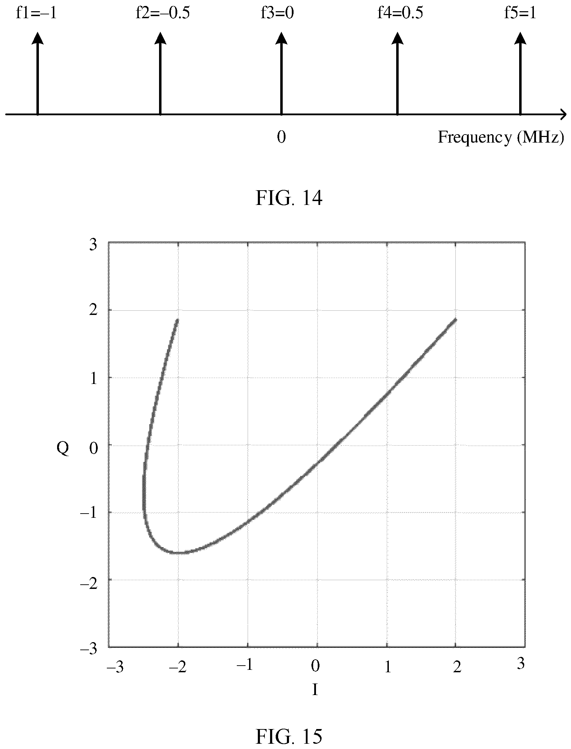

The following describes a design solution of the multi-tone signal with reference to FIG. 14 to FIG. 16 by using an example in which a quantity of tones in the multi-tone signal is equal to 5.

As shown in FIG. 14, a frequency of a first single-tone signal in the multi-tone signal is the smallest, for example, fl =-1 MHz, a frequency of a fifth single-tone signal is the largest, for example, f5=1 MHz, and a frequency of a second single-tone signal is between the frequency of the first single-tone signal and a frequency of a third single-tone signal, for example, f2=-0.5 MHz, f3=0 MHz, and a frequency of a fourth single-tone signal is between the frequency of the third single-tone signal and the frequency of the fifth single-tone signal, for example, f4=0.5 MHz. A frequency separation of the multi-tone signal is 0.5 MHz, and amplitudes of all tones are the same.

The lowest PAPR of the multi-tone signal may be determined by traversing the initial phases of the tones, and a corresponding initial phase combination is recorded at the same time. For example, assuming that φ1, φ2, φ3, φ4, and cp5 are respectively initial phases of the multi-tone signal whose frequencies are f1, f2, f3, f4, and f5, when (p2=0 and φ4=0, by traversing the initial phases φ1, φ3, φ4, and φ5, it may be found that a PAPR corresponding to "φ1=1.05, φ3=3.01, φ5=1.05" or "φ1=2.09, φ3=0.13, φ5=2.09" is the lowest value, that is, 1.76 dB. In comparison with a PAPR corresponding to a conventional multi-tone signal being 10*log(5*5/5)=6.99 dB (an initial phase of each tone is 0), this implementation can obtain a gain of 6.99 dB-1.76 dB=5.23 dB. To be specific, "φ1=1.05, φ2=0, φ3=3.01, φ4=0, φ5=1.05" and "φ1=2.09, φ2=0, φ3=0.13, φ4=0, φ5=2.09" are used as optimal initial phase combinations of the multi-tone signal in which N=5 (fl=-1 MHz, f2=-0.5 MHz, f3=0 MHz, f4=0.5 MHz, f5=1 MHz).

FIG. 15 shows a change track of a multi-tone signal corresponding to the foregoing optimal initial phase combination "φ1=1.05, φ2=0, φ3=3.01, φ4=0, φ5=1.05" in an IQ plane (it is assumed that an amplitude of each tone is 1). As shown in FIG. 15, as time increases, the IQ of the multi-tone signal moves back and forth on a track shown in the figure.

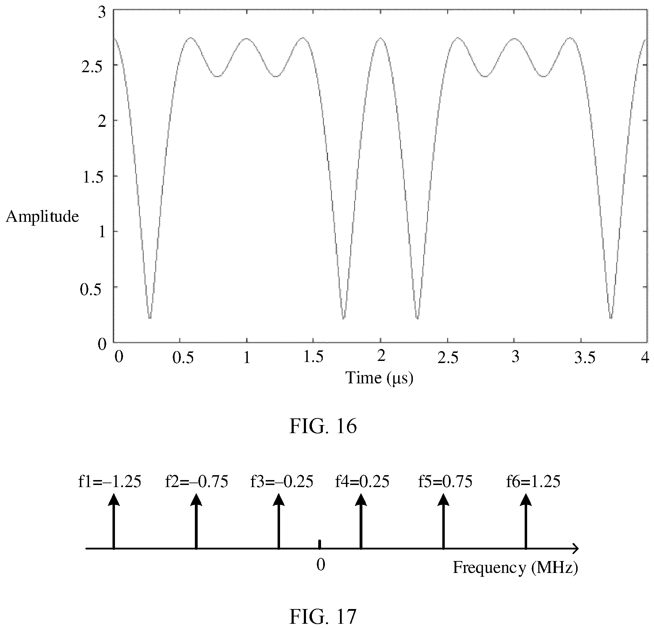

FIG. 16 is a diagram of changes with time of an amplitude of the multi-tone signal corresponding to the foregoing optimal initial phase combination "φ1=1.05, φ2=0, φ3=3.01, φ4=0, φ5=1.05". As shown in FIG. 16, a maximum amplitude value of the multi-tone signal is 2.74, and a corresponding PAPR is 1.76 dB.

It should be noted that, based on the foregoing two groups of optimal initial phase values "φ1=1.05, φ2=0, φ3=3.01, φ4=0, φ5=1.05" and "φ1=2.09, φ2=0, φ3=0.13, φ4=0, φ5=2.09" that are used as two groups of "basic optimal initial phase combinations", various other optimal initial phase combinations may be derived. Details are described below, and details are not described herein.

The following describes a design solution of the multi-tone signal with reference to FIG. 17 to FIG. 19 by using an example in which a quantity of tones in the multi-tone signal is equal to 6.

As shown in FIG. 17, a frequency of a first single-tone signal in the multi-tone signal is the smallest, for example, fl=-1.25 MHz, a frequency of a sixth single-tone signal is the largest, for example, f6=1.25 MHz, a frequency of a second single-tone signal is between the frequency of the first single-tone signal and a frequency of a third single-tone signal, for example, f2=-0.75 MHz, f3=-0.25 MHz, and a frequency of a fourth single-tone signal is between the frequency of the third single-tone signal and a frequency of a fifth single-tone signal, for example, f4=0.25 MHz, f5=0.75 MHz. A frequency separation of the multi-tone signal is 0.5 MHz, and amplitudes of all tones are the same.

The lowest PAPR of the multi-tone signal may be determined by traversing the initial phases of the tones, and a corresponding initial phase combination is recorded at the same time. For example, assuming that φ1, φ2, φ3, φ4, φ5, and φ6 are respectively initial phases of the multi-tone signal whose frequencies are f1, f2, f3, f4, f5, and f6, when φ3=0 and φ4=0, by traversing the initial phases φ1, φ2, φ5, and φ6, it may be found that a PAPR corresponding to "φ1=5.00, φ2=3.67, φ5=3.67, φ6=5.00", or "φ1=1.28, φ2=2.61, φ5=2.61, φ6=1.28" is the lowest value, that is, 1.90 dB. In comparison with a PAPR corresponding to a conventional multi-tone signal being 10*log(6*6/6)=7.78 dB (an initial phase of each tone is 0), this implementation can obtain a gain of 7.78 dB-1.90 dB=5.88 dB. To be specific, "φ1=5.00, φ2=3.67, φ3=0, φ4=0, φ5=3.67, φ6=5.00", and "φ1=1.28, φ2=2.61, φ3=0, φ4=0, φ5=2.61, φ6=1.28" are used as optimal initial phase combinations of the multi-tone signal in which N=6 (f1=-1.25 MHz, f2=-0.75 MHz, f3=-0.25 MHz, f4=0.25 MHz, f5=0.75 MHz, f6=1.25 MHz).

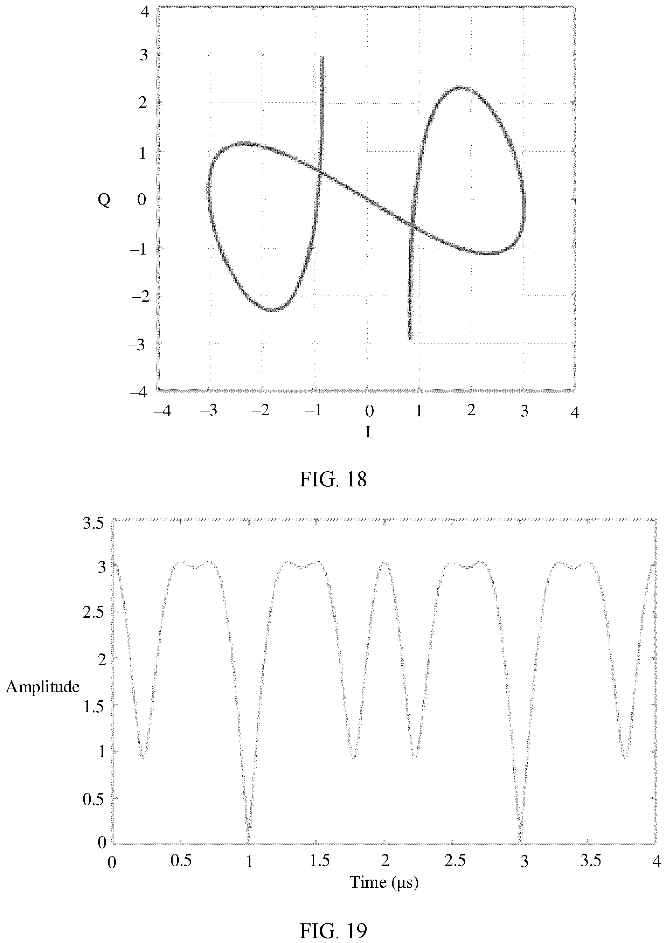

FIG. 18 shows a change track of a multi-tone signal corresponding to the foregoing optimal initial phase combination "φ1=5.00, φ2=3.67, φ3=0, φ4=0, φ5=3.67, φ6=5.00" in an IQ plane (it is assumed that an amplitude of each tone is 1). As shown in FIG. 18, as time increases, the IQ of the multi-tone signal moves back and forth on a track shown in the figure, and it takes 4 μs for one-cycle movement.

FIG. 19 is a diagram of changes with time of an amplitude of the multi-tone signal corresponding to the foregoing optimal initial phase combination "φ1=5.00, φ2=3.67, φ3=0, φ4=0, φ5=3.67, φ6=5.00". As shown in FIG. 19, a maximum amplitude value of the multi-tone signal is 3.05, and a corresponding PAPR is 1.90 dB.

It should be noted that, based on the foregoing two groups of optimal initial phase values "φ1=5.00, φ2=3.67, φ3=0, φ4=0, φ5=3.67, φ6=5.00" and "cpl=1.28, φ2=2.61, φ3=0, φ4=0, φ5=2.61, φ6=1.28" that are used as two groups of "basic optimal initial phase combinations", various other optimal initial phase combinations may be derived. Details are described below, and details are not described herein.

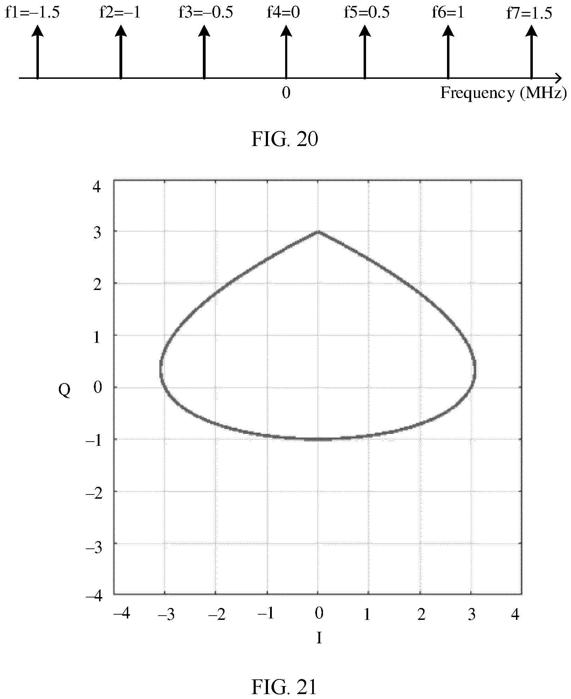

The following describes a design solution of the multi-tone signal with reference to FIG. 20 to FIG. 22 by using an example in which a quantity of tones in the multi-tone signal is equal to 7.

As shown in FIG. 20, a frequency of a first single-tone signal in the multi-tone signal is the smallest, for example, f1=-1.5 MHz, a frequency of a seventh single-tone signal is the largest, for example, f7=1.5 MHz, a frequency of a second single-tone signal is between the frequency of the first single-tone signal and a frequency of a third single-tone signal, for example, f2=-1 MHz, f3=-0.5 MHz, a frequency of a fourth single-tone signal is between the frequency of the third single-tone signal and a frequency of a fifth single-tone signal, for example, f4=0 MHz, f5=0.5 MHz, and a frequency of a sixth single-tone signal is between the frequency of the fifth single-tone signal and the frequency of the seventh single-tone signal, for example, f6=1 MHz. A frequency separation of the multi-tone signal is 0.5 MHz, and amplitudes of all tones are the same.

The lowest PAPR of the multi-tone signal may be determined by traversing the initial phases of the tones, and a corresponding initial phase combination is recorded at the same time. For example, assuming that φ1, φ2, φ3, cp4, φ5, cp6, and cp7 are respectively initial phases of the multi-tone signal whose frequencies are f1, f2, f3, f4, f5, f6, and f7, when φ3=0 and φ5=0, by traversing the initial phases φ1, φ2, cp4, cp6, and cp7, it may be found that a PAPR corresponding to "cpl=3.14, cp2=1.57, cp4=1.57, φ6=1.57, φ7=3.14", or "cpl=3.14, φ2=4.71, cp4=4.71, φ6=4.71, φ7=3.14" is the lowest value, that is, 1.38 dB. In comparison with a PAPR corresponding to a conventional multi-tone signal being 10*log(7*7/7) =8.45 dB (an initial phase of each tone is 0), this implementation can obtain a gain of 8.45 dB-1.38 dB=7.07 dB. To be specific, "cpl=3.14, φ2=1.57, φ3=0, φ4=1.57, φ5=0, φ6=1.57, φ7=3.14" and "cpl=3.14, φ2=4.71, φ3=0, φ4=4.71, φ5=0, φ6=4.71, φ7=3.14" are used as optimal initial phase combinations of the multi-tone signal in which N=6 (fl=-1.25 MHz, f2=-0.75 MHz, f3=-0.25 MHz, f4=0.25 MHz, f5=0.75 MHz, f6=1.25 MHz).

Alternatively, "φ1=π, φ2=π/2, φ3=0, φ4=π/2, φ5=0, φ6=π/2, φ7=π" and "φ1=π, φ2=3π/2, φ3=0, φ4=3π/2, φ5=0, φ6=3π/2, φ7=π" may be used as optimal initial phase combinations of the multi-tone signal in which N=7 (f1=-1.5 MHz, f2=-1 MHz, f3=-0.5 MHz, f4=0 MHz, f5=0.5 MHz, f6=1 MHz, f7=1.5 MHz).

FIG. 21 shows a change track of a multi-tone signal corresponding to the foregoing optimal initial phase combination "φ1=3.14, cp2=1.57, φ3=0, φ4=1.57, φ5=0, φ6=1.57, φ7=3.14" in an IQ plane (it is assumed that an amplitude of each tone is 1). As shown in FIG. 21, as time increases, the IQ of the multi-tone signal moves back and forth on a track shown in the figure.

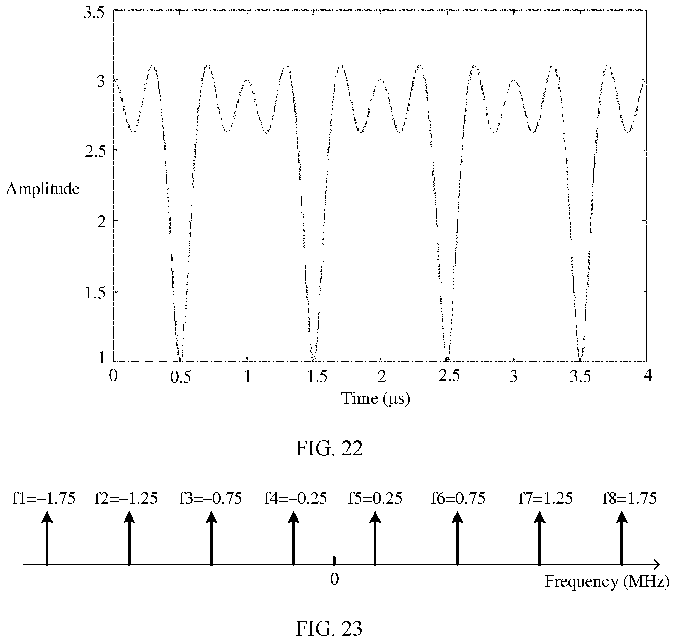

FIG. 22 is a diagram of changes with time of an amplitude of the multi-tone signal corresponding to the foregoing optimal initial phase combination "cpl=3.14, cp2=1.57, φ3=0, φ4=1.57, φ5=0, φ6=1.57, φ7=3.14". As shown in FIG. 22, a maximum amplitude value of the multi-tone signal is 3.1, and a corresponding PAPR is 1.38 dB.

It should be noted that, based on the foregoing two groups of optimal initial phase values "cpl=3.14, φ2=1.57, φ3=0, φ4=1.57, φ5=0, φ6=1.57, φ7=3.14" and "φ1=3.14, φ2=4.71, φ3=0, φ4=4.71, φ5=0, cp6=4.71, φ7=3.14" that are used as two groups of "basic optimal initial phase combinations", various other optimal initial phase combinations may be derived. Details are described below, and details are not described herein.

The following describes a design solution of the multi-tone signal with reference to FIG. 23 to FIG. 25 by using an example in which a quantity of tones in the multi-tone signal is equal to 8.

As shown in FIG. 23, a frequency of a first single-tone signal in the multi-tone signal is the smallest, for example, fl=-1.75 MHz, a frequency of an eighth single-tone signal is the largest, for example, f8=1.75 MHz, a frequency of a second single-tone signal is between the frequency of the first single-tone signal and a frequency of a third single-tone signal, for example, f2=-1.25 MHz, f3=-0.75 MHz, a frequency of a fourth single-tone signal is between the frequency of the third single-tone signal and a frequency of a fifth single-tone signal, for example, f4=-0.25 MHz, f5=0.25 MHz, and a frequency of a sixth single-tone signal is between the frequency of the fifth single-tone signal and a frequency of a seventh single-tone signal, for example, f6=0.75 MHz, f7=1.25 MHz. A frequency separation of the multi-tone signal is 0.5 MHz, and amplitudes of all tones are the same.

The lowest PAPR of the multi-tone signal may be determined by traversing the initial phases of the tones, and a corresponding initial phase combination is recorded at the same time. For example, assuming that φ1, φ2, φ3, φ4, φ5, φ6, φ7, and φ8 are respectively initial phases of the multi-tone signal whose frequencies are f1, f2, f3, f4, f5, f6, f7, and f8, when φ4=0 and φ5=0, by traversing the initial phases φ1, φ2, φ3, φ6, φ7, and φ8, it may be found that a PAPR corresponding to "φ1=5.40, φ2=3.84, φ3=0.91, φ6=0.91, φ7=3.84, φ8=5.40, or "cpl=0.88, φ2=2.45, φ3=5.37, cp6=5.37, φ7=2.45, φ8=0.88" is the lowest value, that is, 1.16 dB. In comparison with a PAPR corresponding to a conventional multi-tone signal being 10*log(8*8/8)=9.03 dB (an initial phase of each tone is 0), this implementation can obtain a gain of 9.03 dB-1.16 dB=7.87 dB. To be specific, "cpl=5.40, φ2=3.84, φ3=0.91, φ4=0, φ5=0, φ6=0.91, φ7=3.84, φ8=5.40" and "cpl=0.88, φ2=2.45, φ3=5.37, φ4=0, φ5=0, φ6=5.37, φ7=2.45, φ8=0.88" are used as optimal initial phase combinations of the multi-tone signal in which N=8 (f1=-1.75 MHz, f2=-1.25 MHz, f3=-0.75 MHz, f4=-0.25 MHz, f5=0.25 MHz, f6=0.75 MHz, f7=1.25 MHz, f8=1.75 MHz).

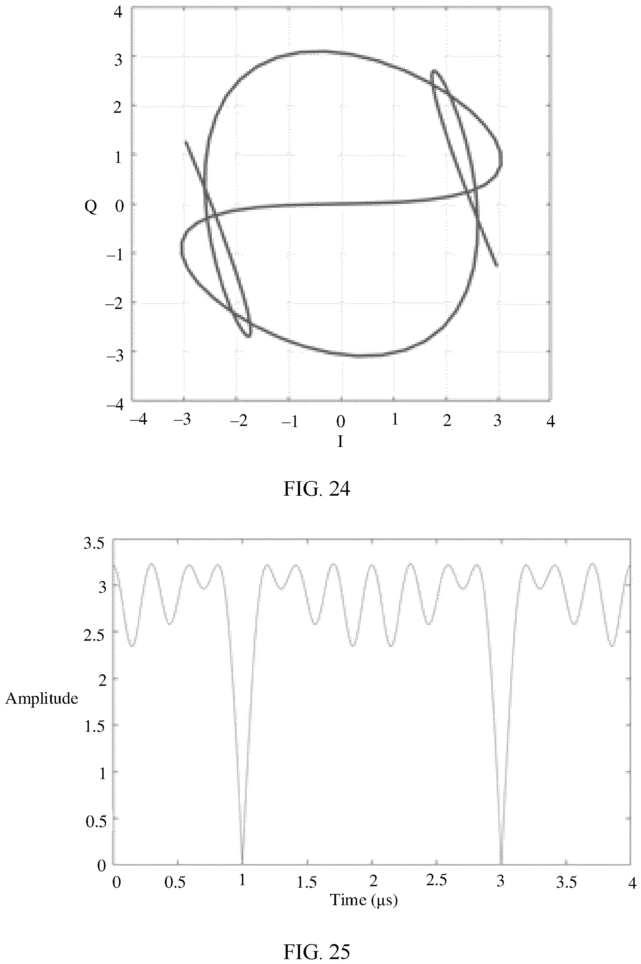

FIG. 24 shows a change track of a multi-tone signal corresponding to the foregoing optimal initial phase combination "cpl=5.40, φ2=3.84, φ3=0.91, φ4=0, φ5=0, φ6=0.91, φ7=3.84, φ8=5.40" in an IQ plane (it is assumed that an amplitude of each tone is 1). As shown in FIG. 24, as time increases, the IQ of the multi-tone signal moves back and forth on a track shown in the figure, and it takes 4 μs for one-cycle movement.

FIG. 25 is a diagram of changes with time of an amplitude of the multi-tone signal corresponding to the foregoing optimal initial phase combination "cpl=5.40, φ2=3.84, φ3=0.91, φ4=0, φ5=0, φ6=0.91, φ7=3.84, φ8=5.40". As shown in FIG. 25, a maximum amplitude value of the multi-tone signal is 3.1, and a corresponding PAPR is 1.16 dB.

It should be noted that, based on the foregoing two groups of optimal initial phase values "cpl=5.40, φ2=3.84, φ3=0.91, φ4=0, φ5=0, φ6=0.91, φ7=3.84, φ8=5.40" and "cpl=0.88, φ2=2.45, φ3=5.37, φ4=0, φ5=0, φ6=5.37, φ7=2.45, φ8=0.88" that are used as two groups of "basic optimal initial phase combinations", various other optimal initial phase combinations may be derived. Details are described below, and details are not described herein.

It should be noted that the foregoing quantity of tones of the multi-tone signal is merely described for ease of understanding of the solution, and should not constitute any limitation on the technical solutions of this application.

S620: A sending device sends the first multi-tone signal to a receiving device.

Correspondingly, the receiving device receives the first multi-tone signal from the sending device.

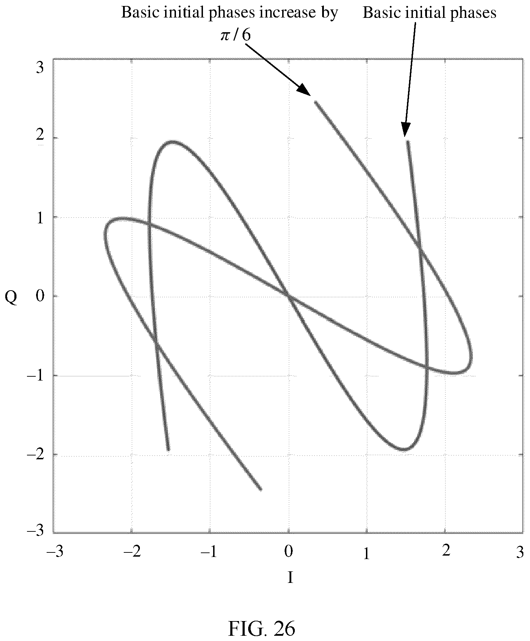

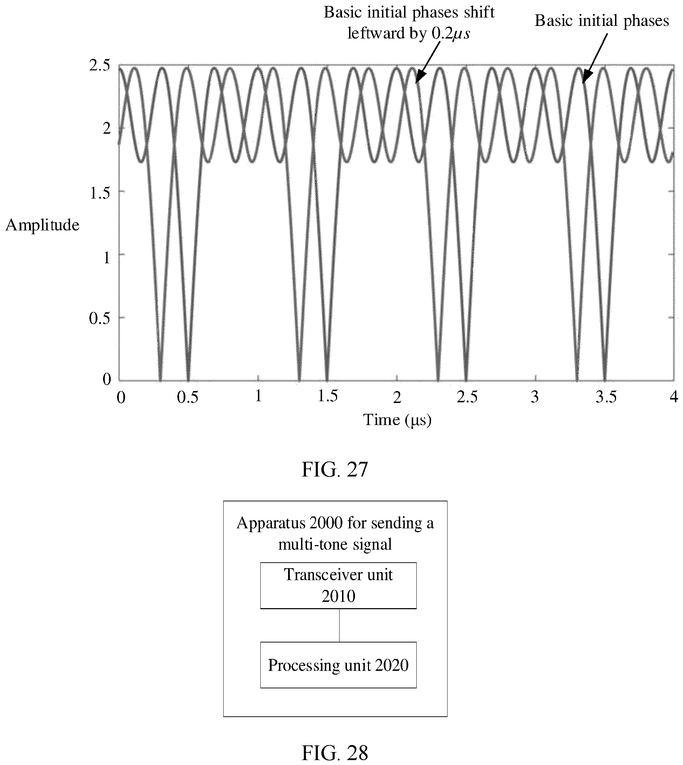

With reference to FIG. 26 and FIG. 27, the following describes several possible implementations of deriving other optimal initial phase combinations for "basic optimal initial phase combinations" corresponding to different quantities of tones (for example, N=3, 4, 5, 6, 7 and 8) provided in the foregoing implementations.

In a possible implementation, based on that phases of at least two single-tone signals are the same, a same phase Δφ is added to an initial phase of each single-tone signal in the first multi-tone signal, where Δφ may be any value. To be specific, each point of each single-tone signal in the IQ plane is rotated counterclockwise by Δφ, and the corresponding multi-tone signal is also rotated counterclockwise by Δφ in the IQ plane. This rotation does not change an amplitude of the multi-tone signal, and therefore, an optimal PAPR can also be obtained for the rotated multi-tone signal.

For example, N=4, and the initial phases φ1=1.81, φ2=0, φ3=0, φ4=1.81 of the single-tone signals in the first multi-tone signal are all rotated counterclockwise by Δφ=π/6=0.52, and the corresponding initial phases are φ1=2.33, φ2=0.52, φ3=0.52, φ4=2.33. It should be understood that PAPRs corresponding to the two initial phase combinations are the same.

Specifically, FIG. 26 is a diagram of counterclockwise rotation of a multi-tone signal by Δφ according to an embodiment of this application. As shown in FIG. 26, after an IQ track of basic initial phases " φ1=1.81, φ2=0, φ3=0, φ4=1.81" in the IQ plane is rotated counterclockwise, Δφ=π/6=0.52 is added to the initial phases of the tones, that is, the initial phases change to "φ1=2.33, φ2=0.52, φ3=0.52, φ4=2.33.", and corresponding optimal PAPRs are the same.

In another possible implementation, based on that phases of at least two single-tone signals are the same, each single-tone signal $s_i = cos(2\pi f_i t + \varphi_i) + j \cdot sin(2\pi f_i t + \varphi_i)$ in the first multi-tone signal is translated by Δt on a time axis, where Δt is any value, and the corresponding multi-tone signal is also translated by Δt on the time axis, that is,

$$s'_i = \cos(2\pi f_i(t + \Delta t) + \varphi_i) + j \cdot \sin\left(2\pi f_i\left(t + \Delta t\right) + \varphi_i\right) = \cos(2\pi f_i t + \left(2\pi f_i \cdot \Delta t + \varphi_i\right)) + j \cdot \sin\left(2\pi f_i t + (2\pi f_i \cdot \Delta t + \varphi_i)\right)$$ .

This is equivalent to that the initial phases of the single-tone signals are increased by $2\pi f_i \cdot \Delta t$. The translation does not affect a maximum amplitude value of the multi-tone signal. Therefore, an optimal PAPR can also be obtained for the translated multi-tone signal.

For example, N=4, the initial phases φ1=1.81, φ2=0, φ3=0, φ4=1.81 of the single-tone signals in the first multi-tone signal are all shifted leftward on the time axis by Δt=0.2 μs, and corresponding initial phases are φ1=-0.08, φ2=-0.63, φ3=0.63, φ4=3.70. It should be understood that PAPRs corresponding to the two initial phase combinations are the same.

Specifically, FIG. 27 is a diagram of translation of a multi-tone signal on a time axis by Δt according to an embodiment of this application. As shown in FIG. 27, a curve that is of an amplitude of a multi-tone signal, that changes with time, and that corresponds to basic initial phases "φ1=1.81, φ2=0, φ3=0, φ4=1.81" is shifted leftward by an amplitude of Δt=0.2 μs in time, and then initial phases corresponding to the curve change to "φ1=-0.08, φ2=-0.63, φ3=0.63, φ4=3.70", and corresponding optimal PAPRs are the same.

In still another possible implementation, based on that initial phases of at least two single-tone signals are the same, each point of each single-tone signal in the IQ plane is rotated counterclockwise by Δφ, and each single-tone signal is translated by Δt on a time axis. This also does not affect the maximum amplitude value of the multi-tone signal. Therefore, an optimal PAPR can also be obtained for the multi-tone signal obtained after translation. It should be noted that a sequence of performing rotation and translation processing on the multi-tone signal is not specifically limited.

For example, N=4. After initial phases φ1=1.81, φ2=0, φ3=0, φ4=1.81 of the single-tone signals in the first multi-tone signal are sequentially rotated counterclockwise by Δφ/π=0.52, and then shifted leftward by Δt=0.2 μs on the time axis, a PAPR corresponding to the obtained initial phases is the same as a PAPR corresponding to the original initial phases.

It should be noted that a frequency separation between any two adjacent single-tone signals in the N single-tone signals in the first multi-tone signal is the same. For example, a frequency separation of four tones is 1 MHz, a frequency separation of six tones is 0.5 MHz, and a frequency separation of eight tones is 0.5 MHz, which are all specific values. It should be understood that the optimal initial phases in the foregoing implementation are also applicable to another frequency separation.

In a possible implementation, for example, N=4. Optimal initial phases of a multi-tone signal (with a frequency separation of 1 MHz) whose frequencies are respectively "-1.5 MHz, -0.5 MHz, 0.5 MHz, 1.5 MHz" are also applicable to a multi-tone signal (with a frequency separation of 2 MHz) whose frequencies are "-3 MHz, -1 MHz, 1 MHz, 3 MHz". This is because a time axis of each tone can be reduced or increased at the same time, which is equivalent to multiplying frequencies of all tones by a same multiple, and a time axis of the corresponding multi-tone signal is also reduced or increased in the same way. Such a change of the time axis does not change the maximum amplitude value of the multi-tone signal, and therefore, the same optimal PAPR value can also be obtained.

It should be noted that frequencies of all tones in the foregoing implementation are symmetrical about a frequency of 0 Hz. It should be understood that the optimal initial phases in the foregoing implementation are also applicable to a frequency setting in which frequencies are not symmetrical about 0 Hz.

In another possible implementation, for example, N=4. Optimal initial phases of a multi-tone signal (with a frequency separation of 1 MHz) whose frequencies are respectively "-1.5 MHz, -0.5 MHz, 0.5 MHz, 1.5 MHz" are also applicable to a multi-tone signal (with a frequency separation of 1 MHz) whose frequencies are "-1 MHz, 0 MHz, 1 MHz, 2 MHz", that is, a frequency of each tone is increased by 0.5 MHz. In other words, a new multi-tone signal obtained after a frequency Δf is added to a frequency of each tone in the foregoing implementation is also applicable to the foregoing optimal initial phase combination, where Δf is any value. This is because the new multi-tone signal obtained through an operation of adding Δf to the frequency of the multi-tone signal $s = \Sigma s_i$ meets:

$$s^{'} = s \cdot (\cos(2\pi \cdot \Delta f \cdot t) + j \cdot \sin(2\pi \cdot \Delta f \cdot t))$$

Correspondingly, an amplitude of the new multi-tone signal s' meets: $|s'| = |s| \cdot |\cos(2\pi \cdot \Delta f \cdot t) + j \cdot \sin(2\pi \cdot \Delta f \cdot t)| = |s|$. It can be learned that the amplitude of the new multi-tone signal s' is the same as an amplitude of a multi-tone signal s before conversion. Therefore, in the foregoing implementation, the optimal initial phase combination of the multi-tone signal s before conversion is also applicable to the new multi-tone signal s'.

It should be noted that the foregoing example in which N=4 is used is merely described for ease of understanding of the solution, and should not constitute any limitation on the technical solutions of this application.

According to the technical solutions of this application, a design of an initial phase combination and a design of a corresponding multi-tone signal waveform are provided. For a multi-tone signal used by a low-power narrowband device for AoA/AoD and MCPD ranging, the technical solutions of this application can provide a plurality of initial phase combinations of tones for implementing an optimal PAPR. Initial phases of different multi-tone signals are designed, so that average power for sending a multi-tone signal can be improved, and a transmission distance or coverage of the multi-tone signal can be further increased.

According to the solution provided in this application, different multi-tone signals are designed by changing initial phases, so that a PAPR of a signal is small to a greatest extent, thereby increasing average power for sending the multi-tone signal, and helping increase a transmission distance or coverage of the multi-tone signal.

It should be understood that, in comparison with a conventional multi-tone signal whose initial phases are all 0 by default, average transmit power of the multi-tone signal provided in this application is increased, so that a transmission distance (or coverage) of the signal is increased. For example, if two devices use a multi-tone signal whose initial phases are 0, multi-tone ranging or multi-tone AoA/AoD measurement may not be performed because a received signal is excessively weak.

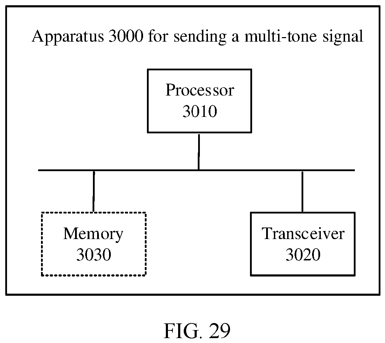

The foregoing describes in detail the embodiments of the method for sending a multi-tone signal in this application with reference to FIG. 1 to FIG. 27. The following describes in detail apparatus embodiments of this application with reference to FIG. 28 and FIG. 29. It should be understood that descriptions of the apparatus embodiments correspond to the descriptions of the apparatus embodiments. Therefore, for a part that is not described in detail, refer to the foregoing apparatus embodiments.

FIG. 28 is a block diagram of an apparatus for sending a multi-tone signal according to an embodiment of this application. As shown in FIG. 28, the apparatus 2000 includes a transceiver unit 2010 and a processing unit 2020. The transceiver unit 2010 may communicate with the outside, and the processing unit 2020 is configured to process data. The transceiver unit 1210 may also be referred to as a communication interface or a transceiver unit.

In a possible design, the apparatus 2000 may implement steps or procedures performed by the sending device in the foregoing apparatus embodiments. The processing unit 2020 is configured to perform processing-related operations of the sending device in the foregoing apparatus embodiments, and the transceiver unit 2010 is configured to perform sending/receiving-related operations of the sending device in the foregoing apparatus embodiments.

In another possible design, the apparatus 2000 may implement steps or procedures performed by the receiving device in the foregoing apparatus embodiments. The transceiver unit 2010 is configured to perform receiving/sending-related operations of the receiving device in the foregoing apparatus embodiments, and the processing unit 2020 is configured to perform processing-related operations of the receiving device in the foregoing apparatus embodiments.

It should be understood that the apparatus 2000 herein is embodied in a form of a functional unit. The term "unit" herein may mean an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the apparatus 2000 may be specifically the transmit end in the foregoing embodiments, and may be configured to perform the procedures and/or steps corresponding to the transmit end in the foregoing apparatus embodiments. Alternatively, the apparatus 2000 may be specifically the receive end in the foregoing embodiments, and may be configured to perform the procedures and/or steps corresponding to the receive end in the foregoing apparatus embodiments. To avoid repetition, details are not described herein again.

The apparatus 2000 in the foregoing solutions has a function of implementing corresponding steps performed by the transmit end in the foregoing apparatus, or the apparatus 2000 in the foregoing solutions has a function of implementing corresponding steps performed by the receive end in the foregoing apparatus. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to separately perform receiving/sending operations and related processing operations in the apparatus embodiments.

In addition, the transceiver unit may alternatively be a transceiver circuit (for example, the transceiver circuit may include a receiver circuit and a transmitter circuit), and the processing unit may be a processing circuit. In this embodiment of this application, the apparatus in FIG. 28 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 29 shows an apparatus 3000 for sending a multi-tone signal according to an embodiment of this application. As shown in FIG. 29, the apparatus 3000 includes a processor 3010 and a transceiver 3020. The processor 3010 and the transceiver 3020 communicate with each other through an internal connection path. The processor 3010 is configured to execute instructions, to control the transceiver 3020 to send a signal and/or receive a signal.

Optionally, the apparatus 3000 may further include a memory 3030. The memory 3030 communicates with the processor 3010 and the transceiver 3020 through an internal connection path. The memory 3030 is configured to store the instructions. The processor 3010 may execute the instructions stored in the memory 3030.

In a possible implementation, the apparatus 3000 is configured to implement the procedures and steps corresponding to the sending device in the foregoing apparatus embodiments.

In another possible implementation, the apparatus 3000 is configured to implement procedures and steps corresponding to the receiving device in the foregoing apparatus embodiments.

It should be understood that the apparatus 3000 may be specifically the transmit end or the receive end in the foregoing embodiments, or may be a chip or a chip system. Correspondingly, the transceiver 3020 may be a transceiver circuit of the chip. This is not limited herein. Specifically, the apparatus 3000 may be configured to perform the steps and/or procedures corresponding to the transmit end or the receive end in the foregoing apparatus embodiments.

Optionally, the memory 3030 may include a read-only memory and a random access memory, and provide instructions and data for the processor. A part of the memory may further include a non-volatile random access memory. For example, the memory may further store information about a device type. The processor 3010 may be configured to execute the instructions stored in the memory. When the processor 3010 executes the instructions stored in the memory, the processor 3010 is configured to perform the steps and/or procedures of the apparatus embodiments corresponding to the transmit end or the receive end.

During implementation, the steps of the foregoing apparatus may be completed by using an integrated logic circuit of hardware in the processor, or instructions in a form of software. The steps of the apparatus disclosed with reference to embodiments of this application may be directly performed by a hardware processor, or may be performed by a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information from the memory and completes the steps of the foregoing apparatus with reference to hardware of the processor. To avoid repetition, details are not described herein again.

It should be noted that, the processor in this embodiment of this application may be an integrated circuit chip, and has a signal processing capability. During implementation, the steps of the foregoing apparatus embodiments may be completed by using an integrated logic circuit of hardware in the processor, or instructions in a form of software. The processor may be a general-purpose processor, a digital signal processor, an application-specific integrated circuit, a field programmable gate array or another programmable logic device, a discrete gate or transistor logic device, or a discrete hardware component. The processor in this embodiment of this application may implement or perform the apparatuses, the steps, and the logical block diagrams that are disclosed in embodiments of this application. The general-purpose processor may be a microprocessor, or the processor may be any conventional processor or the like. The steps of the apparatus disclosed with reference to embodiments of this application may be directly performed by a hardware decoding processor, or may be performed by a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information from the memory and completes the steps of the foregoing apparatus with reference to hardware of the processor.

It may be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and apparatus described in this specification is intended to include but is not limited to, these memories and any memory of another proper type.

According to the apparatus provided in embodiments of this application, this application further provides a computer program product. The computer program product includes computer program code. When the computer program code is run on a computer, the computer is enabled to perform the apparatus in the foregoing embodiments.

According to the apparatus provided in embodiments of this application, this application further provides a computer-readable medium. The computer-readable medium stores program code. When the program code is run on a computer, the computer is enabled to perform the apparatus in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different apparatuses to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing apparatus embodiments, and details are not described herein again.

In the several embodiments provided in this application, it should be understood that the disclosed system, apparatus, and apparatus may be implemented in other manners. For example, the foregoing described apparatus embodiments are merely examples. For example, division into the units is merely logic function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the apparatuses described in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for sending a multi-tone signal, comprising:

   generating a first multi-tone signal, wherein the first multi-tone signal comprises N single-tone signals, amplitude values of the single-tone signals are the same, and initial phases of at least two of the N single-tone signals are the same, or absolute values of initial phases of at least two of the N single-tone signals are the same, wherein N is an integer greater than or equal to 2; and
   sending the first multi-tone signal.

2. The method according to claim 1, wherein the at least two single-tone signals with the same initial phases are symmetrical about a center frequency.

3. The method according to claim 1 or 2, wherein
when N=4, initial phases of the single-tone signals meet one or more of the following:

initial phases of a first single-tone signal and a fourth single-tone signal are the same; or
initial phases of a second single-tone signal and a third single-tone signal are the same, wherein
a frequency of the first single-tone signal is the smallest, a frequency of the fourth single-tone signal is the largest,
and a frequency of the second single-tone signal is greater than the frequency of the first single-tone signal and
less than a frequency of the third single-tone signal.

4. The method according to claim 1 or 2, wherein
when N=8, initial phases of the single-tone signals meet one or more of the following:

initial phases of the first single-tone signal and an eighth single-tone signal are the same;
initial phases of a second single-tone signal and a seventh single-tone signal are the same;
initial phases of a third single-tone signal and a sixth single-tone signal are the same; or
initial phases of a fourth single-tone signal and a fifth single-tone signal are the same, wherein
a frequency of the first single-tone signal is the smallest, a frequency of the eighth single-tone signal is the largest,
a frequency of the third single-tone signal is greater than a frequency of the second single-tone signal and less
than a frequency of the fourth single-tone signal, a frequency of the fifth single-tone signal is greater than the
frequency of the fourth single-tone signal and less than a frequency of the sixth single-tone signal, and the
frequency of the sixth single-tone signal is less than a frequency of the seventh single-tone signal.

5. The method according to claim 1 or 2, wherein
when N=4, initial phases of the N single-tone signals meet any one of the following:

$\varphi2=\varphi3=0$, $1.59\leq\varphi1<1.86$, $\varphi4\geq-\varphi1+3.57$, and $\varphi4\leq-\varphi1*4/9+2.69$;
$\varphi2=\varphi3=0$, $1.86\leq\varphi1\leq1.98$, $\varphi4\geq-\varphi1+3.57$, and $\varphi4\leq-\varphi1*9/4+6.04$;
$\varphi2=\varphi3=0$, $4.3\leq\varphi1<4.42$, $\varphi4\leq-\varphi1+8.99$, and $\varphi4\geq-\varphi1*9/4+14.36$;
$\varphi2=\varphi3=0$, $4.42\leq\varphi1<4.69$, $\varphi4\leq-\varphi1+8.99$, and $\varphi4\geq-\varphi1*4/9+6.38$;
$\varphi2=\varphi3=0$, $0\leq\varphi1<2.05$, $\varphi4\geq-\varphi1+\pi$, and $\varphi4\leq-\varphi1*0.53+\pi$;
$\varphi2=\varphi3=0$, $2.05\leq\varphi1\leq\pi$, $\varphi4\geq-\varphi1+\pi$, and $\varphi4<-\varphi1*1.88+5.9$;
$\varphi2=\varphi3=0$, $\pi\leq\varphi1<4.23$, $\varphi4\leq-\varphi1+9.42$, and $\varphi4\geq-\varphi1*1.88+12.18$;
$\varphi2=\varphi3=0$, $4.23\leq\varphi1\leq2\pi$, $\varphi4\leq-\varphi1+9.42$, and $\varphi4\geq-\varphi1*0.53+6.47$;
$\varphi2=\varphi3=0$, $0\leq\varphi1<2.3$, $\varphi4\geq-\varphi1+2.92$, and $\varphi4\leq-\varphi1*0.46+3.36$;
$\varphi2=\varphi3=0$, $2.3\leq\varphi1<2.92$, $\varphi4\geq-\varphi1+2.92$, and $\varphi4\leq-\varphi1*2.17+7.29$;
$\varphi2=\varphi3=0$, $2.92\leq\varphi1<3.36$, $\varphi4\geq0$, and $\varphi4\leq-\varphi1*2.17+7.29$;
$\varphi2=\varphi3=0$, $2.92\leq\varphi1<3.36$, $\varphi4\leq2\pi$, and $\varphi4\geq-\varphi1*2.17+12.62$;
$\varphi2=\varphi3=0$, $3.36\leq\varphi1<3.98$, $\varphi4\leq-\varphi1+9.64$, and $\varphi4\geq-\varphi1*2.17+12.62$; or
$\varphi2=\varphi3=0$, $3.98\leq\varphi1<2\pi$, $\varphi4\leq-\varphi1+9.64$, and $\varphi4\geq-\varphi1*0.46+5.81$, wherein
$\varphi1$ is an initial phase of a first single-tone signal, $\varphi2$ is an initial phase of a second single-tone signal, $\varphi3$ is an initial
phase of a third single-tone signal, and $\varphi4$ is an initial phase of a fourth single-tone signal.

6. The method according to any one of claims 1 to 5, wherein a frequency separation between any two adjacent single-tone signals in the N single-tone signals is the same.

7. The method according to claim 6, wherein when N=4, the frequency separation between any two adjacent single-tone signals in the N single-tone signals is 1 MHz.

8. The method according to claim 7, wherein

the frequency of the first single-tone signal is -1.5 MHz, the frequency of the second single-tone signal is -0.5 MHz,
the frequency of the third single-tone signal is 0.5 MHz, and the frequency of the fourth single-tone signal is 1.5
MHz; or
the frequency of the first single-tone signal is -1 MHz, the frequency of the second single-tone signal is 0 MHz, the
frequency of the third single-tone signal is 1 MHz, and the frequency of the fourth single-tone signal is 2 MHz.

9. The method according to claim 6, wherein when N=4, the frequency separation between any two adjacent single-tone signals in the N single-tone signals is 2 MHz.

10. The method according to claim 9, wherein
the frequency of the first single-tone signal is -3 MHz, the frequency of the second single-tone signal is -1 MHz, the frequency of the third single-tone signal is 1 MHz, and the frequency of the fourth single-tone signal is 3 MHz.

11. An apparatus for sending a multi-tone signal, comprising:

a processing unit, configured to generate a first multi-tone signal, wherein the first multi-tone signal comprises N single-tone signals, amplitude values of the single-tone signals are the same, and initial phases of at least two of the N single-tone signals are the same, or absolute values of initial phases of at least two of the N single-tone signals are the same, wherein N is an integer greater than or equal to 2; and
a transceiver unit, configured to send the first multi-tone signal.

12. The apparatus according to claim 11, wherein the at least two single-tone signals with the same initial phases are symmetrical about a center frequency.

13. The apparatus according to claim 11 or 12, wherein
when N=4, initial phases of the single-tone signals meet one or more of the following:

initial phases of a first single-tone signal and a fourth single-tone signal are the same; or
initial phases of a second single-tone signal and a third single-tone signal are the same, wherein
a frequency of the first single-tone signal is the smallest, a frequency of the fourth single-tone signal is the largest, and a frequency of the second single-tone signal is greater than the frequency of the first single-tone signal and less than a frequency of the third single-tone signal.

14. The apparatus according to claim 11 or 12, wherein
when N=8, initial phases of the single-tone signals meet one or more of the following:

initial phases of the first single-tone signal and an eighth single-tone signal are the same;
initial phases of a second single-tone signal and a seventh single-tone signal are the same;
initial phases of a third single-tone signal and a sixth single-tone signal are the same; or
initial phases of a fourth single-tone signal and a fifth single-tone signal are the same, wherein
a frequency of the first single-tone signal is the smallest, a frequency of the eighth single-tone signal is the largest, a frequency of the third single-tone signal is greater than a frequency of the second single-tone signal and less than a frequency of the fourth single-tone signal, a frequency of the fifth single-tone signal is greater than the frequency of the fourth single-tone signal and less than a frequency of the sixth single-tone signal, and the frequency of the sixth single-tone signal is less than a frequency of the seventh single-tone signal.

15. The apparatus according to claim 11 or 12, wherein
when N=4, initial phases of the N single-tone signals meet any one of the following:

$\varphi 2=\varphi 3=0$, $1.59 \leq \varphi 1 < 1.86$, $\varphi 4 \geq -\varphi 1+3.57$, and $\varphi 4 \leq -\varphi 1*4/9+2.69$;
$\varphi 2=\varphi 3=0$, $1.86 \leq \varphi 1 \leq 1.98$, $\varphi 4 \geq -\varphi 1+3.57$, and $\varphi 4 \leq -\varphi 1*9/4+6.04$;
$\varphi 2=\varphi 3=0$, $4.3 \leq \varphi 1 < 4.42$, $\varphi 4 \leq -\varphi 1+8.99$, and $\varphi 4 \geq -\varphi 1*9/4+14.36$;
$\varphi 2=\varphi 3=0$, $4.42 \leq \varphi 1 < 4.69$, $\varphi 4 \leq -\varphi 1+8.99$, and $\varphi 4 \geq -\varphi 1*4/9+6.38$;
$\varphi 2=\varphi 3=0$, $0 \leq \varphi 1 < 2.05$, $\varphi 4 \geq -\varphi 1+\pi$, and $\varphi 4 \leq -\varphi 1*0.53+\pi$;
$\varphi 2=\varphi 3=0$, $2.05 \leq \varphi 1 \leq \pi$, $\varphi 4 \geq -\varphi 1+\pi$, and $\varphi 4 \leq -\varphi 1*1.88+5.9$;
$\varphi 2=\varphi 3=0$, $\pi \leq \varphi 1 < 4.23$, $\varphi 4 \leq -\varphi 1+9.42$, and $\varphi 4 \geq -\varphi 1*1.88+12.18$;
$\varphi 2=\varphi 3=0$, $4.23 \leq \varphi 1 \leq 2\pi$, $\varphi 4 \leq -\varphi 1+9.42$, and $\varphi 4 \geq -\varphi 1*0.53+6.47$;
$\varphi 2=\varphi 3=0$, $0 \leq \varphi 1 < 2.3$, $\varphi 4 \geq -\varphi 1+2.92$, and $\varphi 4 \leq -\varphi 1*0.46+3.36$;
$\varphi 2=\varphi 3=0$, $2.3 \leq \varphi 1 < 2.92$, $\varphi 4 \geq -\varphi 1+2.92$, and $\varphi 4 \leq -\varphi 1*2.17+7.29$;
$\varphi 2=\varphi 3=0$, $2.92 \leq \varphi 1 < 3.36$, $\varphi 4 \geq 0$, and $\varphi 4 \leq -\varphi 1*2.17+7.29$;
$\varphi 2=\varphi 3=0$, $2.92 \leq \varphi 1 < 3.36$, $\varphi 4 \leq 2\pi$, and $\varphi 4 \geq -\varphi 1*2.17+12.62$;
$\varphi 2=\varphi 3=0$, $3.36 \leq \varphi 1 < 3.98$, $\varphi 4 \leq -\varphi 1+9.64$, and $\varphi 4 \geq -\varphi 1*2.17+12.62$; or
$\varphi 2=\varphi 3=0$, $3.98 \leq \varphi 1 < 2\pi$, $\varphi 4 \leq -\varphi 1+9.64$, and $\varphi 4 \geq -\varphi 1*0.46+5.81$, wherein
$\varphi 1$ is an initial phase of a first single-tone signal, $\varphi 2$ is an initial phase of a second single-tone signal, $\varphi 3$ is an initial phase of a third single-tone signal, and $\varphi 4$ is an initial phase of a fourth single-tone signal.

16. The apparatus according to any one of claims 11 to 15, wherein a frequency separation between any two adjacent single-tone signals in the N single-tone signals is the same.

17. The apparatus according to claim 16, wherein
when N=4, the frequency separation between any two adjacent single-tone signals in the N single-tone signals is 1 MHz.

18. The apparatus according to claim 17, wherein

the frequency of the first single-tone signal is -1.5 MHz, the frequency of the second single-tone signal is -0.5 MHz, the frequency of the third single-tone signal is 0.5 MHz, and the frequency of the fourth single-tone signal is 1.5 MHz; or
the frequency of the first single-tone signal is -1 MHz, the frequency of the second single-tone signal is 0 MHz, the frequency of the third single-tone signal is 1 MHz, and the frequency of the fourth single-tone signal is 2 MHz.

19. The apparatus according to claim 16, wherein
when N=4, the frequency separation between any two adjacent single-tone signals in the N single-tone signals is 2 MHz.

20. The apparatus according to claim 19, wherein
the frequency of the first single-tone signal is -3 MHz, the frequency of the second single-tone signal is -1 MHz, the frequency of the third single-tone signal is 1 MHz, and the frequency of the fourth single-tone signal is 3 MHz.

21. An apparatus for sending a multi-tone signal, comprising: a processor, wherein the processor is coupled to a memory; and the processor is configured to execute a computer program stored in the memory, so that the apparatus performs the method according to any one of claims 1 to 10.

22. A chip, comprising a processor, configured to invoke a computer program from a memory and run the computer program, to enable a communication apparatus on which the chip is installed to perform the method according to any one of claims 1 to 10.

23. A computer program, wherein when the computer program is executed by the apparatus, the method according to any one of claims 1 to 31 is implemented.

24. A computer-readable storage medium, wherein the computer-readable storage medium stores a computer program, and when the computer program is run, the computer is enabled to perform the method according to any one of claims 1 to 10.

Receiving
device

AoA

Sending device

FIG. 1

Sending device

AoD

Receiving
device

FIG. 2

Baseband multi-tone signal

f1    f2    f3    f4

0    Frequency

Up-conversion

Radio frequency multi-tone signal transmitted from an antenna

fc+f1    fc+f2    fc+f3    fc+f4

fc    Frequency

FIG. 3

Q

A

φ

I

FIG. 4

Q

s1

s1+s2

I

s2

FIG. 5

600

| Generate a first multi-tone signal, where the first multi-tone signal includes N single-tone signals, amplitude values of the single-tone signals are the same, and initial phases of at least two of the N single-tone signals are the same, or absolute values of initial phases of at least two of the N single-tone signals are the same, where N is an integer greater than or equal to 2 |
|---|

~S610

| Send the first multi-tone signal |
|---|

~ S620

FIG. 6

f1=−1  f2=0  f3=1

0  Frequency (MHz)

FIG. 7

FIG. 8

FIG. 9

f1=–1.5    f2=–0.5    f3=0.5    f4=1.5

0    Frequency (MHz)

FIG. 10

FIG. 11

FIG. 12

FIG. 13

f1=–1　　　f2=–0.5　　　f3=0　　　f4=0.5　　　f5=1

0　　　Frequency (MHz)

FIG. 14

FIG. 15

FIG. 16

f1=−1.25    f2=−0.75    f3=−0.25    f4=0.25    f5=0.75    f6=1.25

0    Frequency (MHz)

FIG. 17

FIG. 18

FIG. 19

f1=−1.5    f2=−1    f3=−0.5    f4=0    f5=0.5    f6=1    f7=1.5

0                                    Frequency (MHz)

FIG. 20

FIG. 21

FIG. 22

f1=−1.75   f2=−1.25   f3=−0.75   f4=−0.25   f5=0.25   f6=0.75   f7=1.25   f8=1.75

0                                                                    Frequency (MHz)

FIG. 23

FIG. 24

FIG. 25

Basic initial phases increase by $\pi/6$   Basic initial phases

FIG. 26

Basic initial phases shift
leftward by 0.2$\mu s$

Basic initial phases

Amplitude

Time (μs)

FIG. 27

Apparatus 2000 for sending a
multi-tone signal

Transceiver unit
2010

Processing unit 2020

FIG. 28

Apparatus 3000 for sending a multi-tone signal

Processor
3010

Memory
3030

Transceiver
3020

FIG. 29

# INTERNATIONAL SEARCH REPORT

| International application No. |
| --- |
| **PCT/SG2022/050545** |

### A. CLASSIFICATION OF SUBJECT MATTER

*H01Q 3/26 (2006.01)    H04B 7/06 (2006.01)*

According to International Patent Classification (IPC)

### B. FIELDS SEARCHED

Minimum documentation searched (classification system followed by classification symbols)

H01Q; H04B

Documentation searched other than minimum documentation to the extent that such documents are included in the fields searched

Electronic data base consulted during the international search (name of data base and, where practicable, search terms used)

FAMPAT, IEEE, CNKI: multi, different, tone, frequency, carrier, signal, message, amplitude, magnitude, same, identical, equal, phase, initial, begin, start, 多音, 信号, 幅度, 幅值, 相同, 一样, 相等, 初始, 相位 and other related terms

### C. DOCUMENTS CONSIDERED TO BE RELEVANT

| Category* | Citation of document, with indication, where appropriate, of the relevant passages | Relevant to claim No. |
| --- | --- | --- |
| X | CN 113228531 A (HUAWEI TECHNOLOGIES CO., LTD.), 06 August 2021, paragraphs [0058]-[0062] | 1-24 |
| X | CN 101534135 A (HUAWEI TECHNOLOGIES CO., LTD.), 16 September 2009, figures 5-6, and pages 7-10 | 1-24 |

☒ Further documents are listed in the continuation of Box C.          ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of the issuance of the international search report |
| --- | --- |
| 03 April 2023 | 04 April 2023 |

| Name and mailing address of the ISA/SG | Authorized officer |
| --- | --- |
| **Intellectual Property Office of Singapore** 1 Paya Lebar Link, #11-03 PLQ 1, Paya Lebar Quarter Singapore 408533 E-mail: pct@ipos.gov.sg | HONG, Lei (Dr.) IPOS Telephone No. (+65) 6339 8616 |

Form PCT/ISA/210 (second sheet) (July 2022)

<table>
<tr><td colspan="3" align="center">**INTERNATIONAL SEARCH REPORT**</td><td>International application No.<br>**PCT/SG2022/050545**</td></tr>
<tr><td colspan="4">C (Continuation).    DOCUMENTS CONSIDERED TO BE RELEVANT</td></tr>
<tr><td colspan="2">Category*</td><td>Citation of document, with indication, where appropriate, of the relevant passages</td><td>Relevant to claim No.</td></tr>
<tr><td></td><td>A</td><td>CN 102594422 A (SHARP CORPORATION), 18 July 2012, entire document, particularly figure 10, and paragraphs [0140]-[0143]</td><td></td></tr>
<tr><td></td><td>A</td><td>CN 1222276 A (AMATI COMMUNICATIONS CORP.), 07 July 1999, entire document, particularly figure 2, and pages 5-6</td><td></td></tr>
<tr><td></td><td>A</td><td>WO 2022/013994 A1 (MITSUBISHI ELECTRIC CORPORATION), 20 January 2022, machine translation, entire document</td><td></td></tr>
<tr><td></td><td>A</td><td>CN 110768921 A (CHINA MOBILE COMMUNICATIONS GROUP CO., LTD.), 07 February 2020, entire document</td><td></td></tr>
<tr><td></td><td>A</td><td>US 2012/0082251 A1 (VANDEN BOSSCHE M.), 05 April 2012, entire document</td><td></td></tr>
</table>

Form PCT/ISA/210 (continuation of second sheet (1)) (July 2022)

<table>
<tr><td colspan="2" rowspan="2"><strong>INTERNATIONAL SEARCH REPORT</strong><br>Information on patent family members</td><td colspan="2">International application No.<br><strong>PCT/SG2022/050545</strong></td></tr>
</table>

*Note: related known patent family members of the patent documents referred to by this international search report are listed in this annex. This authority only provides information on the related patent family members, and assumes no responsibility for the details of the patents.*

| Patent Documents referred in the Report | Publication Date/Announcement Date (day/month/year) | Patent Family | Publication Date/Announcement Date (day/month/year) |
|---|---|---|---|
| CN 113228531 A | 06/08/2021 | EP 3921952 A1 | 15/12/2021 |
| | | US 2022/0029462 A1 | 27/01/2022 |
| | | WO 2020/210283 A1 | 15/10/2020 |
| CN 101534135 A | 16/09/2009 | None | |
| CN 102594422 A | 18/07/2012 | EA 200870069 A1 | 27/02/2009 |
| | | US 2010/0311358 A1 | 09/12/2010 |
| | | EP 1965509 A1 | 03/09/2008 |
| | | EA 200900380 A1 | 30/12/2009 |
| | | JP 2009105972 A | 14/05/2009 |
| | | DK 2120365 T3 | 29/05/2012 |
| | | CN 101375525 A | 25/02/2009 |
| | | PT 2120365 E | 26/06/2012 |
| | | EP 2439860 A2 | 11/04/2012 |
| | | HK 1136706 A1 | 02/07/2010 |
| | | HK 1140063 A1 | 30/09/2010 |
| | | PL 2120365 T3 | 28/09/2012 |
| | | CN 101674121 A | 17/03/2010 |
| | | JP 2010119119 A | 27/05/2010 |
| | | US 2009/0264076 A1 | 22/10/2009 |
| | | EA 200900381 A1 | 28/08/2009 |
| | | ES 2382933 T3 | 14/06/2012 |
| | | AT 554538 T | 15/05/2012 |
| | | EP 2439861 A2 | 11/04/2012 |
| | | US 2009/0318178 A1 | 24/12/2009 |
| | | WO 2007/072822 A1 | 28/06/2007 |
| | | EP 2120365 A2 | 18/11/2009 |
| | | US 2012/0252381 A1 | 04/10/2012 |
| CN 1222276 A | 07/07/1999 | US 6035000 A | 07/03/2000 |
| | | AU 2675397 A | 12/11/1997 |
| | | JP 2007202176 A | 09/08/2007 |
| | | EP 0894389 A1 | 03/02/1999 |

Form PCT/ISA/210 (patent family annex) (July 2022)

## INTERNATIONAL SEARCH REPORT
### Information on patent family members

| International application No. |
| --- |
| **PCT/SG2022/050545** |

*Note: related known patent family members of the patent documents referred to by this international search report are listed in this annex. This authority only provides information on the related patent family members, and assumes no responsibility for the details of the patents.*

| Patent Documents referred in the Report | Publication Date/Announcement Date (day/month/year) | Patent Family | Publication Date/Announcement Date (day/month/year) |
| --- | --- | --- | --- |
| | | JP 2000509578 A | 25/07/2000 |
| | | WO 97/40609 A1 | 30/10/1997 |
| WO 2022/013994 A1 | 20/01/2022 | | |
| CN 110768921 A | 07/02/2020 | None | |
| US 2012/0082251 A1 | 05/04/2012 | WO 2010/142811 A2 | 16/12/2010 |
| | | EP 2440944 A2 | 18/04/2012 |

Form PCT/ISA/210 (patent family annex) (July 2022)